# EUROPEAN PATENT SPECIFICATION

(11) **EP 4 012 889 B1**
(45) Date of publication and mention of the grant of the patent: **15.10.2025**
(21) Application number: 21211204.9
(22) Date of filing: 30.11.2021
(51) Int. Cl.: H02K 1/14, H02K 1/18, H02K 1/276, H02K 3/14, H02K 3/34, H02K 5/02, H02K 5/04, H02K 5/20, H02K 11/33, H02K 15/0428, H02K 16/04

(54) **MOTOR APPARATUS**
MOTORVORRICHTUNG
APPAREIL FORMANT MOTEUR

(30) Priority: 30.11.2020 KR 20200165023
(43) Date of publication of application: 15.06.2022
(73) Proprietor: Seoul National University R&DB Foundation, Seoul 08826 (KR)
(72) Inventor: HA, Jung-Ik, 06600 Seoul (KR); SHIM, Jae-Hoon, Uiwang-si (KR)
(74) Representative: Isarpatent

(56) References cited:
- EP-A2- 0 869 601
- EP-A2- 1 835 595
- WO-A2-00/74204
- DE-A1- 102014 223 875
- US-A- 5 729 071
- US-A1- 2010 314 962
- US-A1- 2017 170 697

## Description

### BACKGROUND OF THE INVENTION

### 1. Field

The present invention relates to a motor.

### 2. Description of the Related Art

In a general motor structure, a stator is provided to surround the circumference of a rotor in a circle type, and coils or windings are arranged in a plurality of grooves formed on the inner surface side of the stator. As cooling methods, an indirect cooling method by using a cooling channel installed in a housing or using a cooling fan disposed outside the housing, and a spray cooling method by using a cooling water injection may be applied.

Since a conventional electric motor generally has an isotropic cylindrical structure, it may be difficult to efficiently arrange the electric motor in a determined space together with other components. For example, when disposing the conventional electric motor together with other components in an engine room, space utilization may be reduced due to structural characteristics of the electrical motor, and stable arrangement of components may not be easy.

In addition, in manufacturing the conventional electric motor, a step for arranging a plurality of coils on an inner surface of a circular stator becomes a considerably difficult task in the view of design and assembly. In particular, when a hairpin type winding design is applied, it is required to couple winding strands to the stator one by one while considering a position where each winding strand enters the stator. In addition, it is necessary to insert an insulating paper into every slot (or, groove) of the stator, and it is required to weld joined portions in an upper and lower portion of each hairpin of the winding strands, even after assembling the winding strands. This causes significant disadvantages in terms of manufacturing cost. In addition, there is also a design difficulty because the angle at which the hairpins of the winding strands are twisted should be aligned in three dimensions. For example, document EP 1 835 595 A2 describes a single-phase switched reluctance motor whose stator comprises U-shaped iron cores.

Furthermore, with respect to the cooling method, in the case of a spray cooling method applied to the conventional electric motor, there is a problem in that the efficiency is lowered due to the limitation of the cooling performance. In the spray cooling method, as there are few areas where a coolant comes into contact with the coil or stator to cool the coil or stator, and the amount of coolant that comes into contact with the coil or stator is small, there is a limit to the cooling performance. As a result, there is a problem in that the cooling efficiency of the conventional cooling method is degraded, and thus it is difficult to increase the power density of the motor.

Therefore, the development of a new motor device capable of overcoming the problems of the conventional motor as described above is required.

### SUMMARY OF THE INVENTION

The technical problem to be achieved by the present invention is to provide an electric motor having a structure that may increase the stability of the arrangement of the motor and space utilization.

In addition, the technical problem to be achieved by the present invention is to provide an electric motor that design and assembly of a coil unit may be easily implemented.

In addition, the technical problem to be achieved by the present invention is to provide an electric motor having excellent cooling performance and cooling efficiency.

The problem to be solved by the present invention is not limited to the above-mentioned problems, and other problems not mentioned will be understood by those skilled in the art from the following description.

According to one embodiment of the present invention, a motor as defined in claim 1 is provided.

Each of the first and second stators may have a U-shaped cross-sectional structure having an opening open toward the rotor.

The housing structure may have an anisotropic structure with respect to the rotor. The housing structure may have a first length along an extension direction of the first side stator unit and the second side stator unit extending to both sides of the rotor, and a second length smaller than the first length in the other both directions of the rotor in which the first side stator unit and the second side stator unit are not disposed.

The first stator and the second stator may be arranged to form an inner angle θ smaller than 180° with respect to the rotor.

The interior angle θ may satisfy, for example, 130 ° < θ < 180 °.

The first stator may be arranged to be shifted by a given distance in the vertical direction with respect to the center of the rotor.

The second stator may be arranged to be shifted by a given distance in the vertical direction with respect to the center of the rotor.

The first stator and the second stator may have different heights in the vertical direction with respect to the center of the rotor.

The first and the second main yoke portions may have different lengths from each other.

The third and the fourth main yoke portions may have different lengths from each other.

At least one of the first and the second main yoke portions may include a shoe member at an end adjacent to the rotor, and the shoe member may be bent by a predetermined angle with respect to the corresponding main yoke portion.

The first main yoke portion may include a first shoe member at an end adjacent to the rotor, the second main yoke portion may include a second shoe member at an end adjacent to the rotor, and the first shoe member and the second shoe member may have different structures and/or shapes.

The first side stator unit may include a plurality of first stators arranged to be spaced apart in a vertical direction, and the second side stator unit may include a plurality of the second stators arranged to be spaced apart from each other in a vertical direction.

A first and a second cooling solution separation plates for separating the cooling solution from the rotor are disposed in the housing structure. The first cooling solution separation plate is disposed on a side on which the first side stator unit is disposed, and the second cooling solution separation plate is disposed on a side on which the second-side stator unit is disposed.

A first and a second cooling fluid inlets are disposed at one end of the housing structure, the first and the second cooling fluid outlets are disposed at the other end of the housing structure, the cooling solution is injected into the housing structure through the first and second cooling fluid inlets, and is discharged out of the housing structure through the first and second cooling fluid outlets.

An indirect cooling channel through which the cooling fluid may pass may be disposed on the outer circumferential surface of the housing structure.

The motor may be a two-phase electric motor and may be configured to be driven by a driver having a 4-leg inverter.

According to an example not being part of the present invention, a motor comprising a rotor including a magnet member; a first side stator unit including a first and a second main yoke portions disposed on one side of the rotor and extending to the side of the rotor spaced apart from each other, and at least one first stator including a first rear yoke portion interconnecting outer ends of the first and the second main yoke portions; a second side stator unit including a third and a fourth main yoke portions disposed on the other side of the rotor to face the first side stator unit with the rotor interposed therebetween and extending to the side of the rotor spaced apart from each other, and at least one second stator including a second rear yoke portion interconnecting the outer ends of the third and the fourth main yoke portions; a coil unit provided to surround at least one of the first and the second main yoke portions, and at least one of the third and the fourth main yoke portions, respectively; and a housing structure configured to surround the rotor, the first side stator unit, the second side stator unit, and the coil unit; and wherein the first stator and the second stator are arranged to form an inner angle θ smaller than 180° around the rotor is provided.

The first stator may be arranged to be shifted by a given distance in the vertical direction with respect to the center of the rotor.

The second stator may be arranged to be shifted by a given distance in the vertical direction with respect to the center of the rotor.

At least one of the first and the second main yoke portions may include a shoe member at an end adjacent to the rotor, and the shoe member may be bent by a predetermined angle with respect to the corresponding main yoke portion.

According to an example not being part of the present invention, a motor comprising a rotor including a magnet member; a first side stator unit including a first and a second main yoke portions disposed at one side of the rotor and extending to the side of the rotor spaced apart from each other, and at least one first stator including a first rear yoke portion interconnecting outer ends of the first and the second main yoke portions; a second side stator unit including a third and a fourth main yoke portions disposed at the other side of the rotor to face the first side stator unit with the rotor interposed therebetween and extending to the side of the rotor spaced apart from each other, and at least one second stator including a second rear yoke portion interconnecting the outer ends of the third and the fourth main yoke portions; a coil unit provided to surround at least one of the first and the second main yoke portions, and at least one of the third and the fourth main yoke portions, respectively; and a housing structure configured to surround the rotor, the first side stator unit, the second side stator unit, and the coil unit; and wherein at least one of the first and the second stators is arranged to be shifted by a given distance in the vertical direction with respect to the center of the rotor is provided.

The first stator and the second stator may be arranged to form an inner angle θ smaller than 180° with respect to the rotor.

At least one of the first and the second main yoke portions may include a shoe member at an end adjacent to the rotor, and the shoe member may be bent by a predetermined angle with respect to the corresponding main yoke portion.

According to embodiments of the present invention, it is possible to implement a motor having a structure which may overcome the problems such as spatial and cooling inefficiencies due to the cylindrical structure of the conventional electric motor having an isotropic structure, and increase space utilization and stability of arrangement.

In addition, according to the embodiments of the present invention, it is possible to implement a motor capable of greatly improving the ease and convenience of designing and assembling the coil unit as compared to the conventional motor.

In addition, according to the embodiments of the present invention, it is possible to implement a motor which has superior cooling performance and cooling efficiency as compared to the conventional motor, and is capable of increasing the power density due to the above characteristics and ultimately increasing the system efficiency.

In addition, according to embodiments of the present invention, it is possible to implement an electric motor capable of increasing torque control performance through magnetic flux alignment between the rotor and the stator.

The motor according to the above-described embodiments of the present invention may be usefully applied to various fields such as a driving motor of an electric vehicle or the home appliance industry.

### BRIEF DESCRIPTION OF THE DRAWINGS

FIG. 1 is a schematic cross-sectional diagram of a motor according to an embodiment of the present invention.
FIG. 2 is a schematic cross-sectional diagram of a motor according to other embodiment of the present invention.
FIG. 3 is a schematic cross-sectional diagram of a motor according to another embodiment of the present invention.
FIG. 4 is a schematic cross-sectional diagram of a motor according to another embodiment of the present invention.
FIG. 5 is a schematic cross-sectional diagram of a motor according to another embodiment of the present invention.
FIG. 6 is a schematic cross-sectional diagram of a motor according to another embodiment of the present invention.
FIG. 7 is a schematic cross-sectional diagram of a motor according to another embodiment of the present invention.
FIG. 8 is a cross-sectional diagram selectively illustrating the rotor having the magnet member, the first stator, and the second stator in the structure of the motor of FIG. 1.
FIG. 9 is a cross-sectional diagram selectively illustrating the rotor having the magnet member, the first stator, and the second stator in the structure of the motor of FIG. 2.
FIG. 10 is a cross-sectional diagram for explaining a motor according to another embodiment of the present invention.
FIG. 11 is a cross-sectional diagram for explaining a motor according to another embodiment of the present invention.
FIG. 12 is a cross-sectional diagram of a structure of a cooling unit in a motor according to an embodiment of the present invention.
FIG. 13 is an exemplified circuit diagram illustrating a circuit configuration of a driver having a 4-leg inverter applicable to an electric motor according to an embodiment of the present invention.
FIG. 14 is an exemplified diagram illustrating how a driver having a 4-leg inverter can be electrically connected to an electric motor according to an embodiment of the present invention.
FIG. 15 is an exemplified diagram illustrating a driver having a 4-leg inverter (FIG. A) applicable to an electric motor according to an embodiment of the present invention, and a magnitude of a voltage (FIG. B) that may be synthesized therethrough.
FIG. 16 is a cross-sectional diagram illustrating a rotor, a first stator, and a second stator which are applicable to a motor according to an embodiment of the present invention.
FIG. 17 is a perspective diagram illustrating the overall structure of the rotor, the first stator, and the second stator of FIG. 16.
FIGS. 18 and 19 are exploded perspective diagrams illustrating the overall configuration of an electric motor having the rotor, the first stator, and the second stator described with reference to FIGS. 16 and 17.
FIG. 20 is a perspective diagram illustrating the motor in an assembled state of the elements described with reference to FIGS. 18 and 19, from the front side of the motor.
FIG. 21 is a perspective diagram illustrating the motor in an assembled state of the elements described with reference to FIGS. 18 and 19, from the rear side of the motor.
FIG. 22 is a perspective diagram for explaining the structure of the first housing main body illustrated in FIGS. 18 and 19 in more detail.
FIG. 23 is a perspective diagram illustrating a state in which the first and the second housing body units are coupled (assembled) to each other.
FIG. 24 is a diagram illustrating a method for assembling a coil unit into the first stator.
FIG. 25 is a photographic image illustrating a coil unit applicable to a motor according to an embodiment of the present invention.
FIG. 26 is a photographic image illustrating a coil unit applicable to a motor according to another embodiment of the present invention.
FIG. 27 is a diagram illustrating a process for assembling the first stator into which the coil unit is assembled into the first housing body.
FIG. 28 is a diagram illustrating a process for assembling the first cooling solution separation plate into the first housing body in a state in which the first stator in which the coil unit is arranged is assembled into the first housing body.
FIG. 29 is a perspective diagram illustrating a front cover unit described with reference to FIGS. 18 and 19 in more detail.
FIG. 30 is a perspective diagram illustrating the rear cover units 71n and 72n described with reference to FIGS. 18 and 19 in more detail.
FIG. 31 is an exemplified diagram illustrating a design of a cooling fluid passage applied to a housing structure of a motor according to an embodiment of the present invention.
FIG. 32 is an exemplified diagram illustrating a design of inflow and outflow of a cooling solution applied to a housing structure of a motor according to an embodiment of the present invention.
FIG. 33 is a diagram illustrating a configuration of a motor having a structure in which a coil unit is wound around each of all main yoke portions according to an embodiment of the present invention.
FIG. 34 and FIG. 35 are diagrams illustrating a configuration of a motor having a structure in which a coil unit is wound only on some main yoke portions among a plurality of main yoke portions according to another embodiment of the present invention.

### DETAILED DESCRIPTION OF THE INVENTION

Hereinafter, the embodiments of the present invention will be described in detail with reference to the accompanying drawings.

The embodiments of the present invention to be described below are provided to more clearly explain the present invention to those of ordinary skill in the art, and the scope of the present invention is not limited by the following embodiments. The embodiment may be modified in many different forms.

The terminology used herein is used to describe specific embodiments, and is not used to limit the present invention. As used herein, terms in the singular form may include the plural form unless the context clearly dictates otherwise. Also, as used herein, the terms "comprise" and/or "comprising" specifies presence of the stated shape, step, number, action, member, element and/or group thereof; and does not exclude presence or addition of one or more other shapes, steps, numbers, actions, members, elements, and/or groups thereof. In addition, the term "connection" as used herein is a concept that includes not only that certain members are directly connected, but also a concept that other members are further interposed between the members to be indirectly connected.

In addition, in the present specification, when a member is said to be located "on" another member, this includes not only a case in which a member is in contact with another member but also a case in which another member is present between the two members. As used herein, the term "and/or" includes any one and any combination of one or more of those listed items. In addition, as used herein, terms such as "about", "substantially", etc. are used as a range of the numerical value or degree, in consideration of inherent manufacturing and material tolerances, or as a meaning close to the range. Furthermore, accurate or absolute numbers provided to aid the understanding of the present application are used to prevent an infringer from using the disclosed present invention unfairly.

Hereinafter, the embodiments of the present invention will be described in detail with reference to the accompanying drawings. The size or the thickness of the regions or the units shown in the accompanying drawings may be slightly exaggerated for clarity and convenience of description. The same reference numbers refer to the same elements throughout the detailed description.

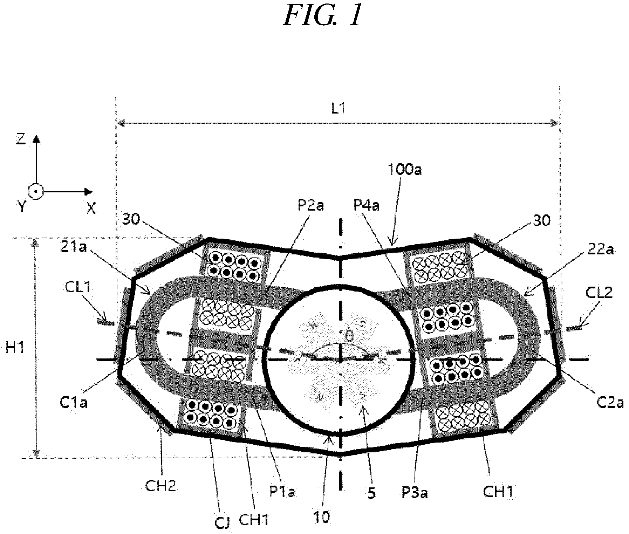

FIG. 1 is a schematic cross-sectional diagram of a motor according to an embodiment of the present invention.

Referring to FIG. 1, a motor according to a present embodiment may include a rotor 10, a first stator 21a disposed on one side of the rotor 10, and a second stator 22a disposed on the other side of the rotor 10 to face the first stator 21a with the rotor 10 interposed therebetween. The rotor 10 may include a magnet member 5. The magnet member 5 may comprise an electromagnet or a permanent magnet, and it is preferable that the magnet member 5 includes a permanent magnet. The magnet member 5 may include a plurality of N poles and a plurality of S poles, and the plurality of N poles and the plurality of S poles may be alternately arranged with each other and may be radially arranged with respect to a center of the rotor 10. However, the configuration of the magnet member 5 is only exemplary, and the present invention is not limited thereto.

The first stator 21a may be disposed on one side of the rotor 10, and may include a first and a second main yoke portions P1a, P2a extending to the lateral side of the rotor 10 while being spaced apart from each other; and a first rear yoke portion C1a interconnecting the outer ends of each of the first and the second main yoke portions P1a, P2a. At least a unit of each of the first and second main yoke portions P1a, P2a may extend flatly or linearly. In one embodiment, each of the first and the second main yoke portions P1a, P2a may have a substantially flat plate shape for sliding insertion of the coil unit 30 as will be described later. The first and the second main yoke portions P1a, P2a may be parallel to each other, but in some cases, they may not be parallel to each other and may be arranged in a non-parallel manner. In this embodiment, it may be said that the first stator 21a constitutes a 'first-side stator unit' with respect to the rotor 10.

The second stator 22a may be disposed on the other side of the rotor 10, and may include a third and a fourth main yoke portions P3a and P4a extending to the lateral side of the rotor 10 while being spaced apart from each other; and a second rear yoke portion C2a interconnecting the outer ends of each of the third and the fourth main yoke portions P3a and P4a. In one embodiment, each of the third and fourth main yoke portions P3a and P4a may have a substantially flat plate shape for sliding insertion of the coil unit 30. The third and fourth main yoke portions P3a and P4a may be parallel to each other, but in some cases, they may not be parallel to each other. That is, they may be arranged in a non-parallel manner. In this embodiment, it may be said that the second stator 22a constitutes a 'second side stator unit' with respect to the rotor 10.

In FIG. 1, each of the first and the second stators 21a and 22a may have a U-shaped cross-sectional structure having an opening facing the rotor 10. However, the U-shaped cross-sectional structure is only exemplary. As described above, the first main yoke portion P1a and the second main yoke portion P2a may not be parallel to each other, and similarly, since the third main yoke portion P3a and the forth main yoke portion P4a may be also not parallel to each other, and the distance therebetween may be gradually increased or decreased.

As shown in Fig. 1, the first and the second stators 21a and 22a may be arranged in a left side and a right side (approximately a left side and a right side) in the horizontal direction (that is, in the X axis direction, and -X axis direction in the Cartesian coordinate system) with respect to the rotor 10. The angle θ of the extension central axes CL1 and CL2 of the first and the second stators 21a and 22a may be greater than 90° and less than or equal to 180°. An additional stator member may not be provided in the vertical direction (i.e., the Z-axis direction and the reverse direction of the Z-axis, i.e. - Z direction) of the rotor 10. Herein, the vertical direction means a direction of the thickness of motor Accordingly, it may be said that the stators 21a and 22a are provided mainly in the left and the right directions for the rotation axis Y with respect to the rotor 10. Therefore, the motor according to the embodiment of the present invention may have an anisotropic structure rather than an isotropic structure with respect to the rotor 10. For example, the motor may have a flat shape extending in the X-axis direction rather than in the Z-direction perpendicular to the Y-axis of the rotation axis. Since the conventional motor has a cylindrical structure, that is, an isotropic structure, a dead volume may occur and it may be difficult to efficiently arrange the motor together with other external components. For example, when disposing a conventional cylindrical motor together with other external components in an engine room of a vehicle, space utilization may be reduced due to structural characteristics of the cylindrical motor, and stable arrangement of components may not be easily implemented. However, in the embodiment of the present invention, since the stators 21a and 22a are dominantly arranged in the X axis in the plane (XY plane) perpendicular to the central axis Y of the rotor 10, the motor may have an anisotropic structure, and the space utilization and stability of the arrangement may be improved in the arrangement of the motor.

The motor according to an embodiment of the present invention may include a coil unit 30 surrounding each of the first to the fourth main yoke portions P1a, P2a, P3a, and P4a. A plurality of coil units 30 may be disposed to surround the first to the fourth main yoke portions P1a, P2a, P3a, and P4a, respectively. A method of assembling the plurality of coil units 30 in the embodiment of the present invention may be very easily implemented. For example, firstly, the coil unit 30 may be pre-fabricated in a form that may surround the first to the fourth main yoke portions P1a, P2a, P3a, P4a, that is, a stator core unit, and then, the pre-fabricated coil unit 30 may be assembled to each of the main yoke portions P1a, P2a, P3a, and P4a by a simple sliding insertion method of putting the pre-fabricated coil unit 30 on the main yoke portions P1a, P2a, P3a, and P4a. Therefore, according to the embodiment of the present invention, assembly or coupling of the coil unit 30 to the main yoke portion may be very easily performed.

In fabricating a conventional cylindrical motor, a step for coupling a plurality of coils to the inner surface of a circular stator may be a very difficult task in view of a design and an assembly steps. In particular, in the case of applying the hairpin type winding design, winding strands should be assembled into the stator one by one while considering the insertion location of each winding strand into the stator. In addition, an insulating paper should be inserted into every slot (groove) of the stator, and after an assembly process, the upper and lower units of the hairpin (or a winding strand) should be welded. This causes significant disadvantages since high manufacturing cost and high skill level are required. In addition, in the conventional cylindrical motor, as a twist angle of the hairpin type winding strand must be adjusted three-dimensionally, there may occur a design difficulty. However, according to the embodiment of the present invention, the coil unit 30 may be easily assembled or coupled to the stator in a very simple manner by virtue of the linearly extended main yoke portions P1a, P2a, P3a, and P4a.

A motor according to an embodiment of the present invention may include a housing structure 100a configured to house a rotor 10, a first stator 21a, a second stator 22a, and a coil unit 30. The housing structure 100a may have an anisotropic structure dominantly extended along the X-axis with the rotor 10 being as a center. As a result, the housing structure 100a may have a 'first length L1' which is relatively large along the extending direction of the first stator 21a and the second stator 22a extending to both sides of the rotor 10. and may have a 'second length H1' which is relatively small in the other both directions (here, up and down directions) of the rotor 10 in which the first stator 21a and the second stator 22a are not provided. For example, the first length may be greater than or equal to about 1.7 times of the second length. As a specific example, the first length may be about 1.7 times to about 5 times of the second length, but the present invention is not limited thereto and the ratio of the length may vary. It may be mentioned that the motor according to the embodiment may have an anisotropic structure corresponding to the appearance of the housing structure 100a.

The motor according to the present invention include a direct cooling system for directly cooling the first stator 21a, the second stator 22a, and the coil unit 30 by using a cooling fluid CJ. The direct cooling system include a direct cooling channel CH1 provided inside the housing structure 100a. The direct cooling channel CH1 may be provided at a side of the first stator 21a and at a side of the second stator 22a, respectively. According to the invention, the cooling fluid is a cooling solution, which is introduced into the housing structure 100a through the direct cooling channel CH1, so that the first stator 21a and the coil unit 30 adjacent to the first stator 21a, and the second stator 22a and the coil unit 30 adjacent to the second stator 22a are cooled while the fluid is flowing in direct contact therewith, and water-cooled cooling having excellent cooling efficiency are implemented.

The refrigerant fluid flowing through the direct cooling channel CH1 provided on the side of the first stator 21a and may flow to the first and second main yoke portions P1a and P2a, and the coil unit 30 provided on each of the first and second main yoke portions P1a, P2a, and the rear yoke portion C1a while the fluid is in direct contact with the first and second main yoke portions P1a, P2a, coil unit 30 and rear yoke portion C1a. In FIG. 1, for convenience, the direct cooling channel CH1 provided on the side of the first stator 21a is illustrated as not surrounding the area of the first rear yoke portion C1a, but the present invention is not limited thereto. Similarly, the cooling solution flowing through the direct cooling channel CH1 provided on the side of the second stator 22a may flow to the third and the fourth main yoke portions P3a and P4a, and the coil unit 30 provided on the third and fourth main yoke portions P3a and P4a and the second yoke rear C2a while the fluid is direct contact with the third and the fourth main yoke portions P3a and P4a, the coil unit 30 and the second yoke rear C2a. In FIG. 1, for convenience, it is illustrated that the direct cooling channel CH1 provided on the side of the second stator 22a does not cover the area of the second rear yoke portion C2a.

In addition, the motor according to the embodiment of the present invention may be provided on the outer circumferential surface of the housing structure 100a and may further include an indirect cooling channel CH2 through which the refrigerant fluid may pass. The indirect cooling channel CH2 may be formed to pass through the inside of the outer wall of the housing structure 100a. The indirect cooling channel CH2 may be provided in a cooling jacket covering the outer wall of the hosing structure 100a or may be formed in the housing structure 100a. By flowing the refrigerant fluid through the indirect cooling channel CH2, internal members such as the first and the second stators 21a and 22a and the coil unit 30 may be cooled in an indirect manner. The refrigerant fluid flowing through the indirect cooling channel CH2 may not directly contact the first and second stators 21a and 22a and the coil unit 30.

In an embodiment of the present invention, the first and second stator 21a and 22a and the coil unit 30 may be directly cooled by flowing a cooling solution through the direct cooling channel CH1, thereby greatly improving cooling performance and cooling efficiency. Accordingly, it is possible to easily improve the power density of the motor, and as a result, it is possible to improve system efficiency. In embodiments of the present invention, since cooling efficiency is improved by direct cooling, current density and magnetic flux density may be easily increased, and power of an electric motor may be increased. In addition, waste heat obtained by the direct cooling method may be used as a heat source for air conditioning, heating, or power generation or may be utilized in other ways, thereby increasing energy efficiency. In addition, in an embodiment of the present invention, since cooling may be performed by using an indirect cooling channel CH2 in addition to a direct cooling channel CH1, cooling performance and efficiency may be more advantageous. However, in some cases, the indirect cooling channel CH2 may not be applied. When the indirect cooling channel CH2 is not applied, there is an advantage in that the economic feasibility and weight of the housing structure 100a may be reduced.

As described above, in the motor according to an embodiment of the present invention, the first stator 21a and the second stator 22a may be disposed to form an inner angle(θ) smaller than 180° and greater than 90° with the rotor 10 being a center. In one embodiment, the inner angle(θ) may be in a range of 130° < θ < 180°. In this case, the first stator 21a and the second stator 22a are arranged in a V shape. In addition, the housing structure 100a may also have a dominantly laterally expanded V-shaped structure with the inner angle (θ) in a range of 130° < θ < 180° in accordance with the outlines of the first stator 21a and the second stator 22a. In another embodiment, the housing structure 100a may have a flat shape in which an upper and lower portion of the housing structure 100a are parallel to the XY plane. In this way, by forming the inner angle(θ) between the first stator 21a and the second stator 22a less than 180° around the rotor 10, magnetic flux alignment characteristics between the rotor 10 and the stator 21a and 22a may be improved. Accordingly, torque control performance of the motor may be improved, and as a result, rotation characteristics of the rotor 10 may be improved.

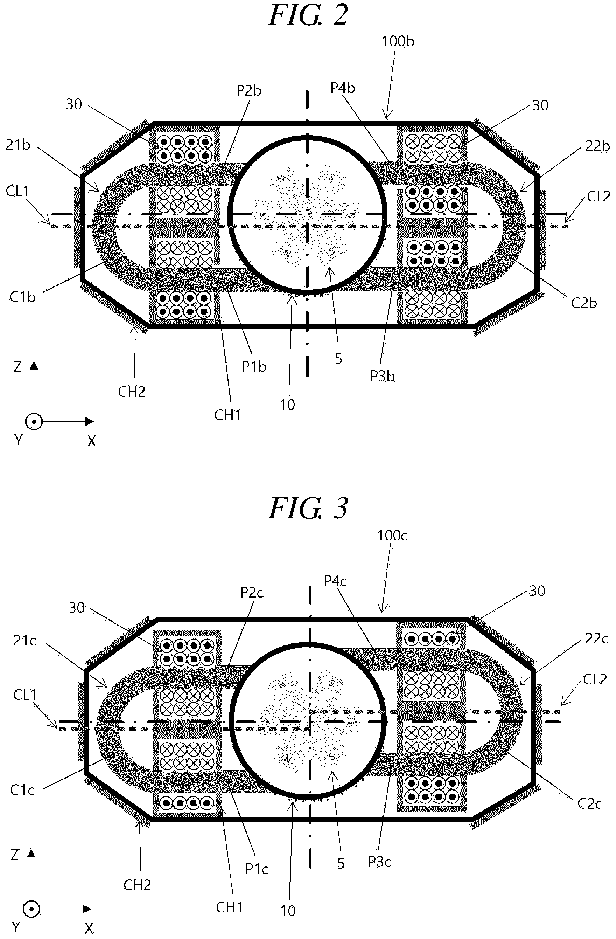

In the embodiment of the present invention, a method for aligning the magnetic flux arrangement(alignment) between the rotor 10 and the stators 21a and 22a may be varied. FIG. 1 illustrates a case in which a method of aligning the inner angle θ between the first stator 21a and the second stator 22a to be smaller than 180° is applied. However, in other embodiments, by changing the relative height of the first stator 21a and the second stator 22a with respect to the rotor 10, changing the relative height between the first stator 21a and the second stator 22a, or changing (i.e., twisting) the extending direction (i.e., angle) of a shoe portion corresponding to the end of the first stator 21a or the second stator 22a, magnetic flux alignment characteristics between the rotor 10 and the stator 21a and 22a may be improved. These other embodiments will be described in more detail with reference to FIGS. 2 to 7.

FIG. 2 is a schematic cross-sectional diagram of a motor according to other embodiment of the present invention.

Referring to FIG. 2, an electric motor according to the present embodiment may include a rotor 10 having a magnet member 5, a first stator 21b disposed on one side of the rotor 10, a second stator 22b disposed on the other side of the rotor 10, a coil unit 30, and a housing structure 100b. Here, the first stator 21b may include the first and the second main yoke portions P1b and P2b, and the first rear yoke portions C1b, and the second stator 22b may include the third and the fourth main yoke portions P3b and P4b and the second rear yoke portions C2b.

In the present embodiment, the first stator 21b and the second stator 22b may be arranged in parallel (horizontally) to form an inner angle of 180°. The first stator 21b may be disposed to be shifted or offset by a predetermined distance in a vertical direction (i.e., a direction parallel to the Z-axis) with respect to the center of the rotor 10. Optionally, the second stator 22b may also be disposed to be shifted or offset by a predetermined distance in a vertical direction (i.e., a direction parallel to the Z-axis) with respect to the center of the rotor 10. FIG. 2 illustrates a case where both the extension central axe CL1 of the first stator 21b and the extension central axe CL2 of the second stator 22b are shifted downward by a predetermined distance with respect to the center of the rotor 10. In this case, the first and the second main yoke portions P1b and P2b may have different lengths. In addition, the third and the fourth main yoke portions P3b and P4b may have different lengths.

In this way, by arranging at least one of the first stator 21b and the second stator 22b to be shifted by a given distance in the vertical direction (i.e., Z direction) with respect to the center of the rotor 10, magnetic flux alignment characteristics between the rotor 10 and the stator 21b and 22b may be improved. Accordingly, torque control performance of the motor may be improved, and as a result, rotation performance of the rotor 10 may be improved.

In addition, in the present embodiment, the housing structure 100b may have a substantially flat shape. Accordingly, in the arrangement of the motor, space utilization and stability of the arrangement may be further improved.

FIG. 3 is a schematic cross-sectional diagram of a motor according to another embodiment of the present invention.

Referring to FIG. 3, a motor according to the present embodiment may include a rotor 10 having a magnet member 5, a first stator 21c provided on one side of the rotor 10, a second stator 22c provided on the other side of the rotor 10, a coil unit 30, and a housing structure 100c. Here, the first stator 21c may include first and the second main yoke portions P1c and P2c and first rear yoke portions C1c, and the second stator 22c may include the third and the fourth main yoke portions P3c and P4c and the second rear yoke portions C2c.

In the present embodiment, the first stator 21c and the second stator 22c may be shifted or offset to have different heights in a vertical direction (i.e., a direction parallel to the Z axis) with respect to each other. With respect to the center of the rotor 10, the extension central axes CL1 and CL2 of the first stator 21c and the second stator 22c may be positioned at different position in the vertical direction. In this case, the first and the second main yoke portions P1c and P2c may have different lengths. In addition, the third and the fourth main yoke portions P3c and P4c may have different lengths. Here, a case where the height of the first stator 21c is lower than the height of the second stator 22c is illustrated, but the opposite case may also be realized.

In this way, by arranging the heights of the first stator 21c and the second stator 22c differently, another degree of freedom capable of modulating magnetic flux alignment characteristics between the rotor 10 and the stator 21c and 22c may be obtained. Accordingly, torque control performance of the motor may be improved, and as a result, rotation performance of the rotor 10 may be improved.

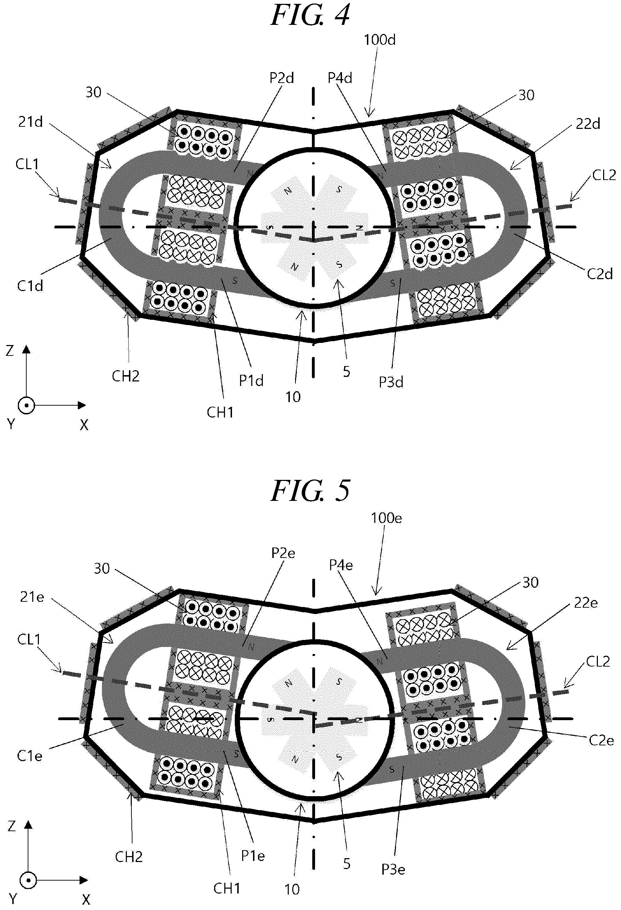

FIG. 4 is a schematic cross-sectional diagram of a motor according to another embodiment of the present invention. FIG. 4 shows a case in which the features of the motor illustrated in FIG. 2 are applied to the motor illustrated in FIG. 1 as an example.

Referring to FIG. 4, a motor according to the present embodiment may include a rotor 10 having a magnet member 5, a first stator 21d disposed on one side of the rotor 10, a second stator 22d disposed on the other side of the rotor 10, a coil unit 30, and a housing structure 100d. Here, the first stator 21d may include first and the second main yoke portions P1d and P2d and first rear yoke portions C1d, and the second stator 22d may include third and fourth main yoke portions P3d and P4d, and second rear yoke portions C2d.

In this embodiment, a V-shaped structure in which the inner angles of the extension central axes CL1 and CL2 of the first stator 21d and the second stator 22d are less than 180° may be formed. In addition, the first stator 21d may be disposed to be shifted by a predetermined distance in the vertical direction with respect to the center of the rotor 10. In addition, the second stator 22d may be disposed to be shifted by a predetermined distance in the vertical direction with respect to the center of the rotor 10. In this way, the magnetic flux alignment characteristics between the rotor 10 and the stator 21d and 22d may be improved by shifting the first stator 21d and the second stator 22d with respect to the center of the rotor 10 while making the inner angle between the first stator 21d and the second stator 22d smaller than 180°.

FIG. 5 is a schematic cross-sectional diagram of a motor according to another embodiment of the present invention. FIG. 5 shows a case in which a feature similar to that of FIG. 3 is applied to the structure of FIG. 1 as an example.

Referring to FIG. 5, a motor according to the present embodiment may include a rotor 10 having a magnet member 5, a first stator 21e disposed on one side of the rotor 10, a second stator 22e disposed on the other side of the rotor 10, a coil unit 30, and a housing structure 100e. Here, the first stator 21e may include the first and the second main yoke portions P1e and P2e and the first rear yoke portion C1e, and the second stator 22e may include the third and the fourth main yoke portions P3e and P4e and the second rear yoke portion C2e.

In the present embodiment, the first stator 21e and the second stator 22e may have a V-shaped structure. In addition, the first stator 21e and the second stator 22e may have different heights in a vertical direction (i.e., a direction parallel to the Z-axis) with respect to each other. Here, a case where the height of the extension central axis CL1 of the first stator 21e is greater than the height of the extension central axis CL2 of the second stator 22e is illustrated, but an opposite case may be implemented. In this way, by arranging the first stator 21e and the second stator 22e in a V-shaped structure and making the heights of the first stator 21e and the second stator 22e different from each other, magnetic flux alignment characteristics between the rotor 10 and the stators 21e and 22e may be improved.

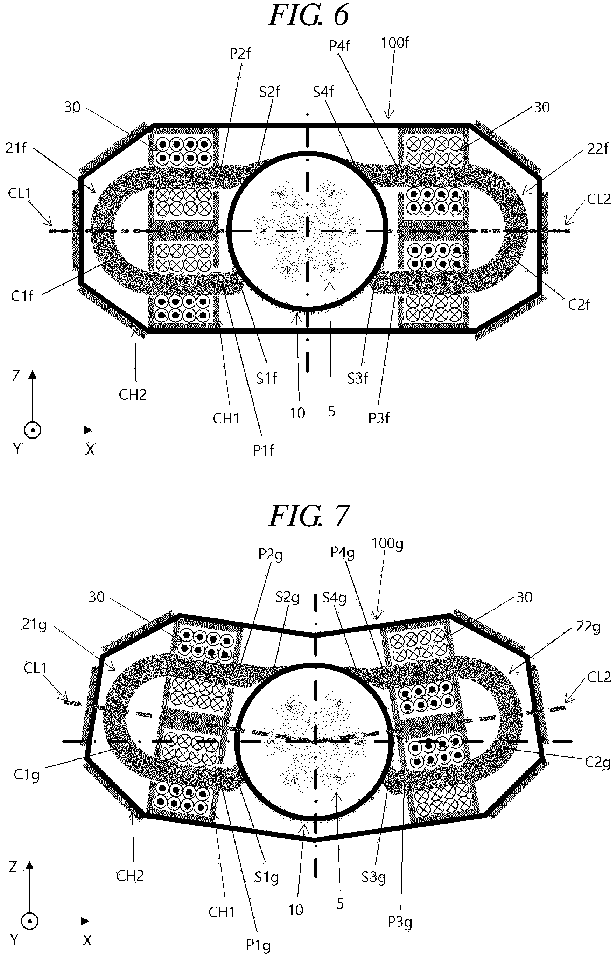

FIG. 6 is a schematic cross-sectional diagram of a motor according to another embodiment of the present invention.

Referring to FIG. 6, a motor according to the present embodiment may include a rotor 10 having a magnet member 5, a first stator 21f disposed on one side of the rotor 10, a second stator 22f disposed on the other side of the rotor 10, a coil unit 30, and a housing structure 100f.

The first stator 21f may include first and the second main yoke portions P1f and P2f and first rear yoke portion C1f. The first main yoke portion P1f may have a first shoe member S1f at an end of the first main yoke portion P1f adjacent to the rotor 10, and the second main yoke portion P2f may have a second shoe member S2f at an end of the second main yoke portion P2f adjacent to the rotor 10. The first shoe member S1f may be bent by a predetermined angle with respect to the first main yoke portion P1f, and the second shoe member S2f may be bent by a predetermined angle with respect to the second main yoke portion P2f. The first shoe member S1f and the second shoe member S2f may have different structures and/or shapes.

The second stator 22f may include third and fourth main yoke portions P3f and P4f and second rear yoke portion C2f. The third main yoke portion P3f may include third shoe member S3f at an end of the third main yoke portion P3f adjacent to the rotor 10, and the fourth main yoke portion P4f may include the fourth shoe member S4f at an end of the fourth main yoke portion P4f adjacent to the rotor 10. The third shoe member S3f may be bent by a predetermined angle with respect to the third main yoke portion P3f, and the fourth shoe member S4f may be bent by a predetermined angle with respect to the fourth main yoke portion P4f. The third shoe member S3f and the fourth shoe member S4f may have different structures and/or shapes.

In this way, in this embodiment, by changing the extension direction (i.e., an angle) of the shoe member corresponding to the ends of the first stator 21f and/or second stator 22f adjacent to the rotor 10, for example, by twisting along the +z axis or -z axis, the magnetic flux alignment between the rotor 10 and the stators 21f and 22f may be secured and rotation performance of the motor may be improved. Accordingly, torque control performance of the motor may be improved, and as a result, rotation characteristics, for example, vibration of the rotor 10 may be improved.

FIG. 7 is a schematic cross-sectional diagram of a motor according to another embodiment of the present invention. As an example, FIG. 7 shows a case in which the features illustrated in FIG. 1 is applied to the structure of FIG. 6.

Referring to FIG. 7, the motor according to the present embodiment may include a rotor 10 having a magnet member 5, a first stator 21g disposed at one side of the rotor 10; and a second stator 22g disposed at the other side of the rotor 10, a coil unit 30 and a housing structure 100g.

The first stator 21g may include first and the second main yoke portions P1g and P2g and first rear yoke portion C1g. The first main yoke portion P1g may include a first shoe member S1g at an end of the first main yoke portion P1g adjacent to the rotor 10, and the second main yoke portion P2g may include a second shoe member S2g at an end of the second main yoke portion P1g adjacent to the rotor 10. The second stator 22g may include third and fourth main yoke portions P3g and P4g and second rear yoke portion C2g. The third main yoke portion P3g may include a third shoe member S3g at an end of the third main yoke portion P3g adjacent to the rotor 10, and the fourth main yoke portion P4g may include a fourth shoe member S4g at an end of the fourth main yoke portion P4g adjacent to the rotor 10.

In this embodiment, the inner angle between the central extension axis CL1 of the first stator 21g and the central axis CL2 of the second stator 22g may form a dominantly laterally expanded V-shaped structure less than 180° but large than 90°. In connection with the structure of FIG. 7, it is to be understood that the characteristics of the V-shaped structure of FIG. 1 is applied to the structure of FIG. 6.

Modifications may be implemented by selecting or combining features of at least two embodiments among the plurality of embodiments described above with reference to FIGS. 1 to 7, and these modified embodiments are included in the present invention.

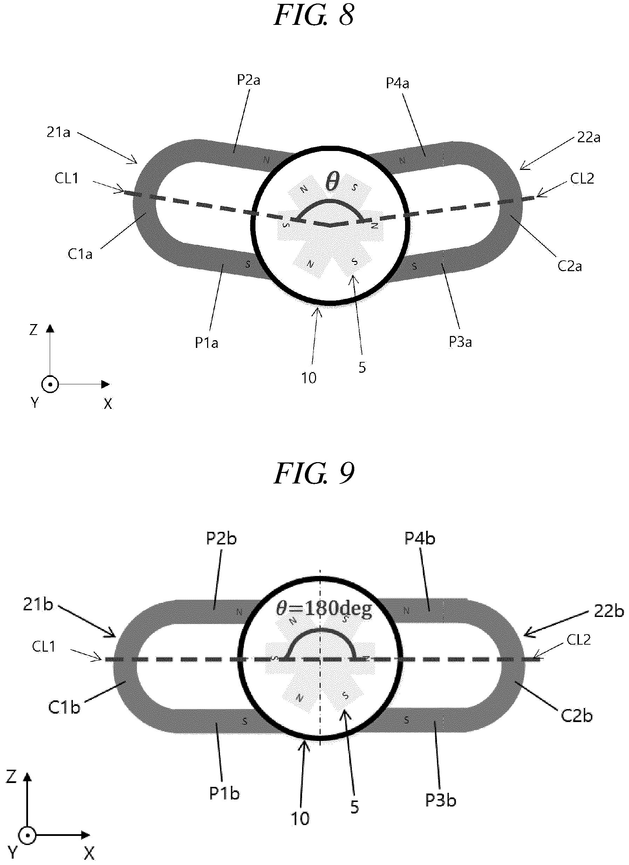

FIG. 8 is a cross-sectional diagram selectively illustrating only rotor 10 having magnet member 5, first stator 21a, and second stator 22a in the structure of motor of FIG. 1. The description of the members having the same reference number as the reference number in FIG. 8 may refer to the disclosure of FIG. 1 unless there are discrepancies.

FIG. 9 is a cross-sectional diagram selectively illustrating only rotor 10 having magnet member 5, first stator 21b, and second stator 22b in the structure of motor of FIG. 2. The description of the members having the same reference number as the reference number in FIG. 9 may refer to the disclosure of FIG. 2 unless there are discrepancies. The first stator 21b and the second stator 22b may be arranged such that their extension central axes CL1 and cL2 may form an inner angle 180° and their extension central axes CL1 and CL2 coincide.

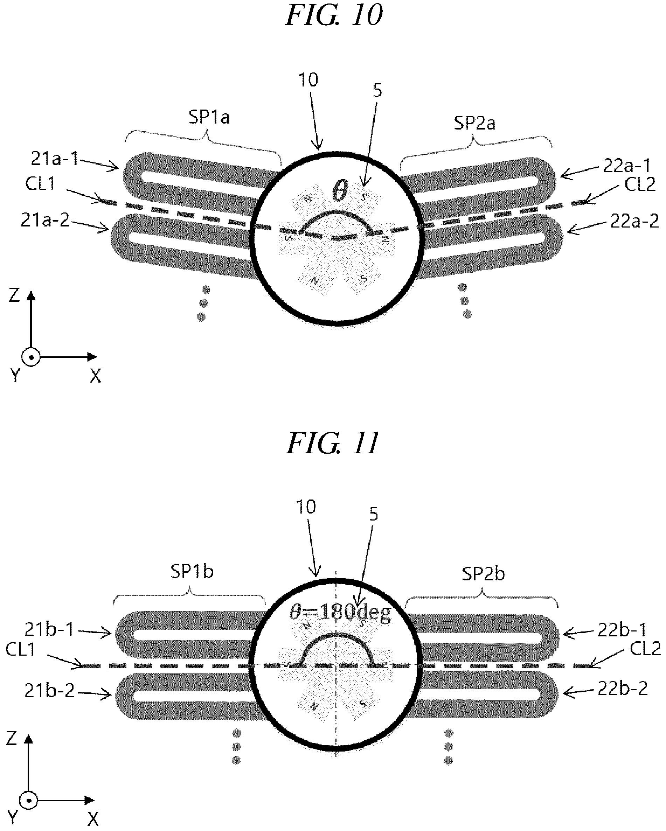

FIG. 10 is a cross-sectional diagram for explaining a motor according to another embodiment of the present invention.

Referring to FIG. 10, the motor according to the present embodiment may include a rotor 10 having a magnet member 5, a first side stator unit SP1a disposed at one side of the rotor 10, and a second side stator unit SP2a at the other side of the rotor 10. The first side stator unit SP1a and the second-side stator unit SP2a may be disposed to face each other with the rotor 10 interposed therebetween.

The first side stator unit SP1a may include a plurality of first stators 21a-1 and 21a-2 which are spaced apart from each other in the vertical direction. Two or more first stators 21a-1 and 21a-2 may be disposed to be spaced apart from each other in the vertical direction along the Z-axis. Similarly, the second side stator unit SP2a may also include a plurality of second stators 22a-1 and 22a-2 disposed to be spaced apart from each other in the vertical direction along the Z-axis. The plurality of second stators 22a-1 and 22a-2 may be disposed to correspond to the plurality of first stators 21a-1 and 21a-2, respectively. Each of the plurality of the first stators 21a-1 and 21a-2 may have a structure similar to that of the first stator 21a described with reference to FIGS. 1 and 8, and each of the plurality of the second stators 22a-1 and 22a-2 may have a structure similar to that of the second stator 22a described with reference to FIGS. 1 and 8.

In an example, the first side stator unit SP1a and the second-side stator unit SP2a may be arranged such that their extension central axes CL1 and CL2 may form a dominantly laterally expanded V-shaped structure around the rotor 10. In an embodiment, the first side stator unit SP1a and the second side stator unit SP2a may be arranged such that their extension central axes CL1 and cL2 may form an inner angle θ smaller than 180°. Although not shown in FIG. 10, the coil unit, the housing structure, and the cooling system may be disposed the same as or similar to those described with reference to FIG. 1.

FIG. 11 is a cross-sectional diagram for explaining a motor according to another embodiment of the present invention.

Referring to FIG. 11, a motor according to this embodiment may include a rotor 10 having a magnet member 5, a first side stator unit SP1b disposed on one side of the rotor 10, and a second side stator unit SP2b disposed on the other side of the rotor 10. The first side stator unit SP1b and the second side stator unit SP2b may be disposed to face each other with the rotor 10 interposed therebetween.

The first side stator unit SP1b may include a plurality of first stators 21b-1 and 21b-2 disposed to be spaced apart from each other in the vertical direction along the Z-axis. More than two first stators 21b-1 and 21b-2 may be disposed to be spaced apart from each other in the vertical direction along the Z-axis. Similarly, the second side stator unit SP2b may include a plurality of second stators 22b-1 and 22b-2 disposed to be spaced apart from each other in the vertical direction. More than two second stators 22b-1 and 22b-2 may be disposed to be spaced apart from each other in the vertical direction along the Z-axis. The plurality of the second stators 22b-1 and 22b-2 may be disposed to correspond to the plurality of the first stators 21b-1 and 21b-2, respectively. Each of the plurality of the first stators 21b-1 and 21b-2 may have a structure similar to that of the first stator 21b described with reference to FIGS. 2 and 9, and each of the plurality of the second stators 22b-1 and 22b-2 may have a structure similar to that of the second stator 22b described with reference to FIGS. 2 and 9.

In this embodiment, the extension central axes CL1 and CL2 of the first side stator unit SP1b and the second side stator unit SP2b may be horizontally arranged to coincide and form an inner angle of 180°. If necessary, the first side stator unit SP1b may be disposed to be shifted or offset by a predetermined distance in the vertical direction along the Z axis with respect to the center of the rotor 10. In addition, the second side stator unit SP2b may be disposed to be shifted by a predetermined distance in the vertical direction along the Z axis with respect to the center of the rotor 10. Although not shown in FIG. 11, the above description may be referred to with respect to the coil unit, the housing structure, and the cooling system.

As shown in FIG. 10 and FIG. 11, by arranging a plurality of first stators 21a-1, 21a-2 / 21b-1, 21b-2 in the first side stator units SP1a, SP1b, and the plurality of second stators 22a-1, 22a-2 / 22b-1, 22b-2 in the second side stator units SP2a, SP2b, the rotation performance of the rotor 10 may be further improved. For example, according to an example of the present invention, by arranging a plurality of the first stators 21a-1, 21a-2 / 21b-1, 21b-2 in the first side stator units SP1a, SP1b, and a plurality of the second stators 22a-1, 22a-2 / 22b-1, 22b-2 in the second-side stator units SP2a, SP2b, it is possible to solve the problem that unequal force is generated in the eccentric direction of the rotating shaft when the rotor 10 rotates. Accordingly, by using the plurality of first stators 21a-1, 21a-2/21b-1, 21b-2 and the plurality of second stators 22a-1, 22a-2/22b-1, 22b-2, it is possible to further improve the operating characteristics of the motor.

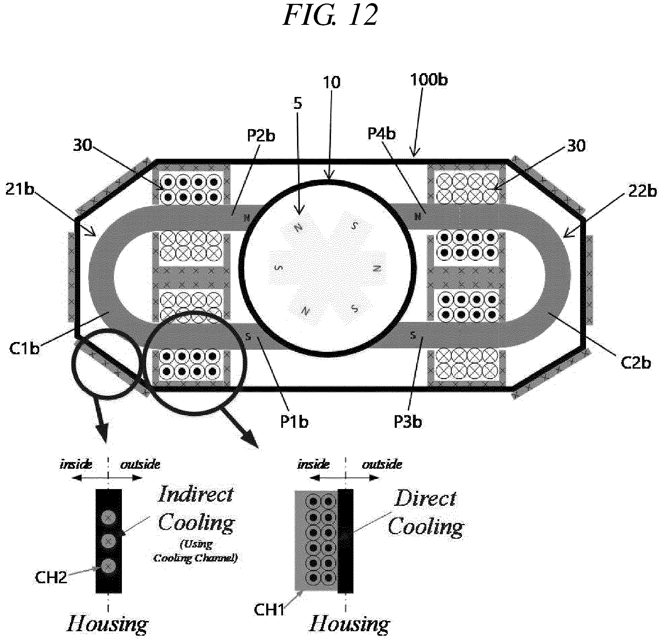

FIG. 12 is a cross-sectional diagram of a structure of a cooling unit in a motor according to an embodiment of the present invention. The structure of the motor of FIG. 12 may be referred to the motor described with reference to FIG. 2.

Referring to FIG. 12, the motor according to the present embodiment may include a direct cooling system for directly cooling a first stator 21b, a second stator 22b, and a coil unit 30 by using a cooling fluid or refrigerant fluid. The direct cooling system may include a direct cooling channel CH1 provided inside a housing structure 100b. The direct cooling channel CH1 may be provided on a side of the first stator 21b and a side of the second stator 22b, respectively. A refrigerant fluid, for example, a cooling solution or cooling water, may be introduced into the housing structure 100b through the direct cooling channel CH1, so that a cooling process may be performed while the refrigerant fluid is flowing by virtue of direct contact with the first stator 21b, the coil unit 30 adjacent to the first stator 21b, the second stator 22b, and the coil unit 30 adjacent to the second stator 22b. The cooling fluid flowing through the direct cooling channel CH1 provided on the side of the first stator 21b may flow to the first and second main yoke portions P1b and P2b, and the coil unit 30 and the first rear unit C1b provided therein, respectively, while the cooling fluid may be in direct contact with them. In FIG. 12, for convenience, the direct cooling channel CH1 disposed on the side of the first stator 21b does not cover the area of the first rear yoke portion C1b. In addition, the refrigerant fluid flowing through the direct cooling channel CH1 provided on the side of the second stator 22b may flow to the third and fourth main yoke portions P3b and P4b, and the coil unit 30 and the second rear yoke portion C2b provided therein, respectively, while the cooling fluid is in direct contact with them. In FIG. 12, for convenience, the direct cooling channel CH1 provided on the side of the second stator 22b does not cover the area of the second rear yoke portion C2b.

The motor according to the embodiment of the present invention may further include an indirect cooling channel CH2 through which the refrigerant fluid may pass and may be disposed on the outer peripheral surface of the housing structure 100b. The indirect cooling channel CH2 may be formed to pass through an inside of an outer wall of the housing structure 100b. By flowing the refrigerant fluid through the indirect cooling channel CH2, the first and the second stators 21b and 22b, and the coil unit 30 may be cooled in an indirect manner. The refrigerant fluid flowing through the indirect cooling channel CH2 may not directly contact the first and the second stators 21b and 22b, and the coil unit 30.

In the embodiment of the present invention, since the first and the second stators 21b and 22b and the coil unit 30 may be directly cooled by flowing the cooling solution directly through the cooling channel CH1, the cooling performance and cooling efficiency may be remarkably improved. Therefore, it is possible to easily improve the power density of the motor, and ultimately, to improve the system efficiency. Since the waste heat obtained by the direct cooling method may be used as another energy source such as air conditioning, heating, or power generation, energy efficiency may be more increased. In addition, in an example of the present invention, since cooling may be performed by using the indirect cooling channel CH2 as well as the direct cooling channel CH1, it may be more advantageous to improve cooling performance and efficiency. However, in some cases, the indirect cooling channel CH2 may not be applied. When the indirect cooling channel CH2 is not applied, a process for fabricating the housing structure 100b may be made easier, and thus, the manufacturing cost may be reduced.

A motor according to embodiments of the present invention may be a two-phase electric motor. Further, the motor according to the above embodiments may be configured to be driven by a driver having a 4-leg inverter.

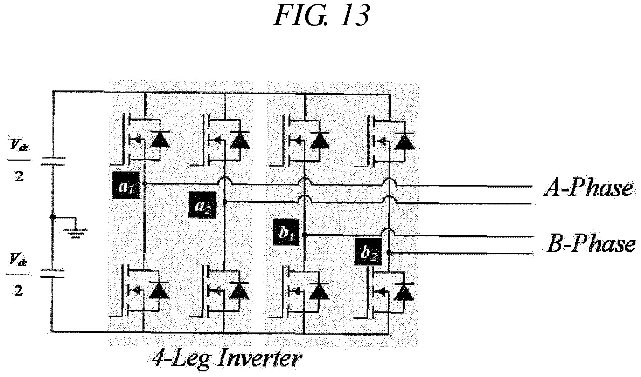

FIG. 13 is an exemplified circuit diagram illustrating a circuit configuration of a driver having a 4-leg inverter, which may be applied to an electric motor according to an embodiment of the present invention.

Referring to FIG. 13, a circuit configuration of a driver having a 4-leg inverter is illustrated by way of example. A power circuit topology for driving an electric motor according to an embodiment of the present invention may have a 4-leg circuit as shown in FIG. 13. Here, a metal oxide semiconductor field-effect transistor (SiC-MOSFET) is exemplified as a switch device, but other types of power semiconductors, for example, an Si-insulated gate bipolar transistor (Si-IGBT) may be applied, and the present invention is not limited to these transistors.

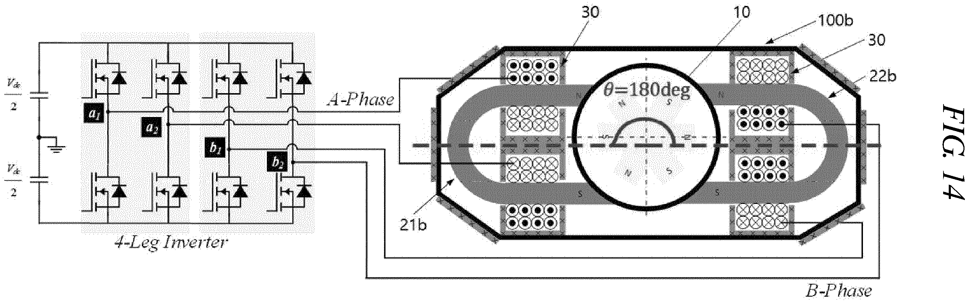

FIG. 14 is a diagram illustrating a configuration in which a driver having a 4-leg inverter is electrically connected to an electric motor according to an embodiment of the present invention. In FIG. 14, an electric motor having the structure of FIG. 2 is exemplified.

Referring to FIG. 14, an A-phase signal from a driver having a 4-leg inverter may be applied to the two coil units 30 adjacent to the first stator 21b, and the B-phase signal may be applied to the two coil units 30 adjacent to second stator 22b. However, this circuit connection relationship is only exemplary and may be variously changed according to the configuration of the motor.

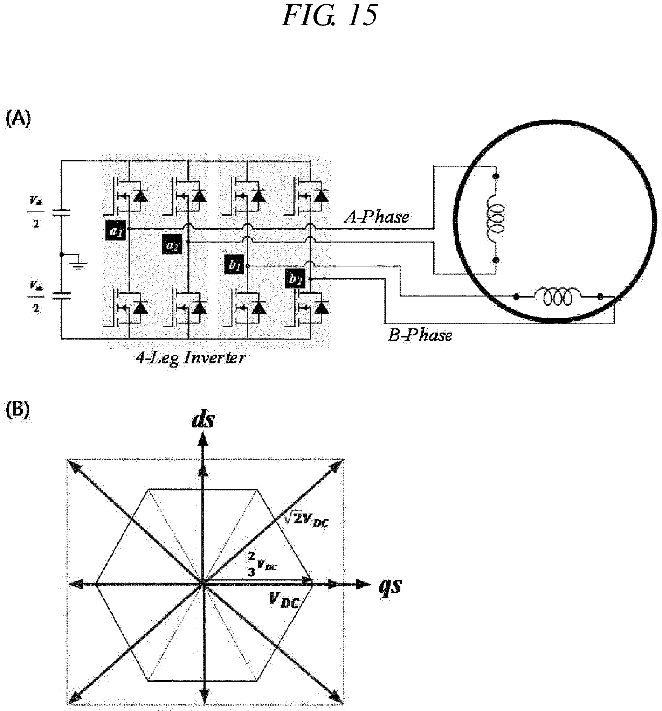

FIG. 15 is an exemplified diagram illustrating a driver having a 4-leg inverter (FIG. A) applicable to an electric motor according to an embodiment of the present invention, and a magnitude (FIG. B) of a voltage that may be synthesized thereby. By using a driver with a 4-leg inverter, it is possible to greatly increase the rotating magnetic field for driving the motor.

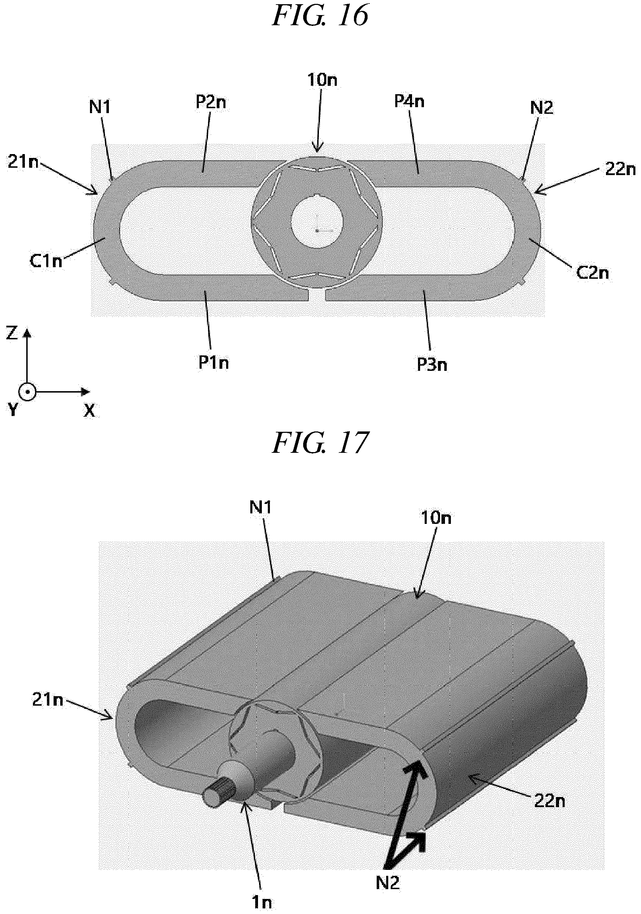

FIG. 16 is a cross-sectional diagram illustrating a rotor 10n, a first stator 21n, and a second stator 22n which are may be applied to a motor according to an embodiment of the present invention. The motor may be described similarly to the motor of Fig. 2.

FIG. 17 is a perspective diagram illustrating the overall structure of the rotor 10n, the first stator 21n, and the second stator 22n of FIG. 16. In FIG. 17, the shaft 1n provided in the inner hollow of the rotor 10n is further shown.

Referring to FIGS. 16 and 17, a rotor 10n having a circular cylinder structure having a hollow portion may be provided, and a shaft 1n may be inserted into a hollow portion of the rotor 10n. A first stator 21n may be provided at one side of the rotor 10n, and a second stator 22n may be provided at the other side of the rotor 10n. The rotor 10n, the first stator 21n, and the second stator 22n may have a structure similar to that described with reference to FIG. 2.

The first stator 21n may include first and the second main yoke portions P1n and P2n, and the first rear yoke portions C1n, and the second stator 22n may include third and the fourth main yoke portions P3n and P4n, and the second rear yoke portions C2n. The first stator 21n may be shifted by a predetermined distance in a vertical direction (i.e., a direction parallel to the Z-axis) with respect to the center of the rotor 10n. In addition, the second stator 22n may be shifted by a predetermined distance in a vertical direction (i.e., a direction parallel to the Z-axis) with respect to the center of the rotor 10n. Here, it is illustrated that both the first stator 21n and the second stator 22n may be shifted by a predetermined distance downward from the center of the rotor 10n in the drawing. In this case, the first and the second main yoke portions P1n and P2n may have different lengths from each other, and the third and the fourth main yoke portions P3n and P4n may have different lengths from each other. In addition, the ends adjacent to the rotor 10n of the first and the second main yoke portions P1n and P2n may have different structures/shape, and the ends adjacent to the rotor 10n of the third and the fourth main yoke portions P3n and P4n may have different structures and/or shape.

In addition, at least one projection portion N1 may be provided on an outer surface of the first stator 21n for a fastening guide (i.e., a fixing guide) when assembled with the housing member. Similarly, at least one projection portion N2 for a fastening guide (i.e., a fixing guide) may be provided on an outer surface of the second stator 22n when assembled with the housing member. For example, the projection portions N1 and N2 may be formed to extend linearly in the longitudinal direction of the stator 21n and 22n.

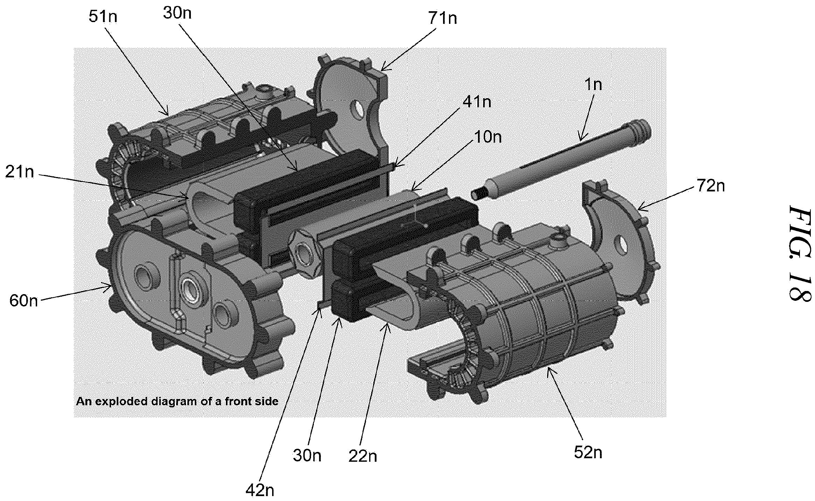

Hereinafter, a detailed configuration of the motor to be described with reference to FIGS. 18 to 32 is an example of a configuration applicable to the rotor 10n, the first stator 21n, and the second stator 22n described with reference to FIGS. 16 and 17.

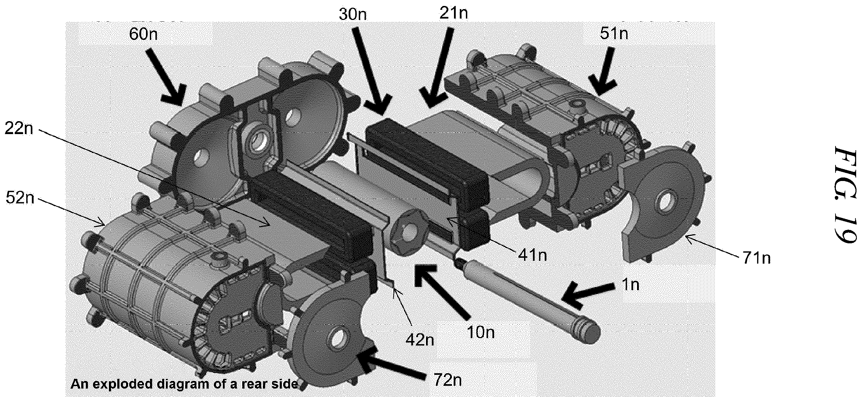

FIGS. 18 and 19 are exploded perspective diagrams illustrating the overall configuration of an electric motor having a rotor 10n, a first stator 21n, and a second stator 22n described with reference to FIGS. 16 and 17. FIG. 18 is an exploded perspective diagram observed from the front side, and FIG. 19 is an exploded perspective diagram observed from the rear side (back side).

Referring to FIGS. 18 and 19, a shaft 1n may be inserted into a hollow portion of the rotor 10n. A first stator 21n may be provided at one side of the rotor 10n, and a second stator 22n may be disposed at the other side of the rotor 10n. The coil units 30n surrounding each of the first and second main yoke portions (P1n and P2n of FIG. 16) of the first stator 21n, and the third and fourth main yoke portions (P3n and P4n of FIG. 16) of the second stator 22n may be provided.

A first cooling solution separation plate 41n for separating the cooling solution from the rotor 10n may be provided between the rotor 10n and the first stator 21n. For example, two rectangular openings may be provided in the first cooling solution separation plate 41n, and end units of the first and second main yoke portions (P1n and P2n of FIG. 16) may be inserted into the two rectangular openings. A second cooling solution separation plate 42n for separating the cooling solution from the rotor 10n may be provided between the rotor 10n and the second stator 22n. Two rectangular openings may be provided in the second cooling solution separation plate 42n, and end units of the third and fourth main yoke portions P3n and P4n of FIG. 16 may be inserted into the two rectangular openings.

The first housing body unit 51n may be disposed to surround the first stator 21n, the coil unit 30n, and the first cooling solution separation plate 41n, and the second housing body unit 52n may be disposed to surround the second stator 22n and the second cooling solution separation plate 42n.

In a state in which the first and second housing body units 51n and 52n are assembled to housing the rotor 10n, the first and second stator 21n and 22n, the coil units 30n, the first and second cooling solution separation plates 41n and 42n, and the front cover units 60n, a front cover unit 60n may be assembled to front units of the first and second housing body units 51n and 52n, and first and second rear cover units 71n and 72n may be assembled to a rear unit(a rear unit) of the first and second housing body units 51n and 52n.

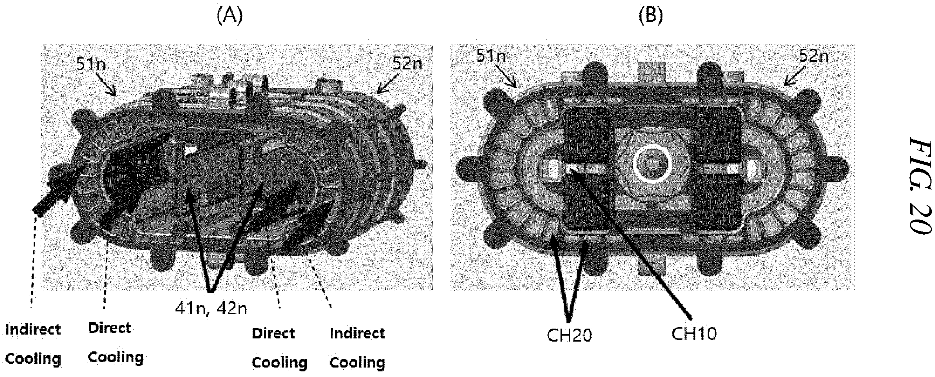

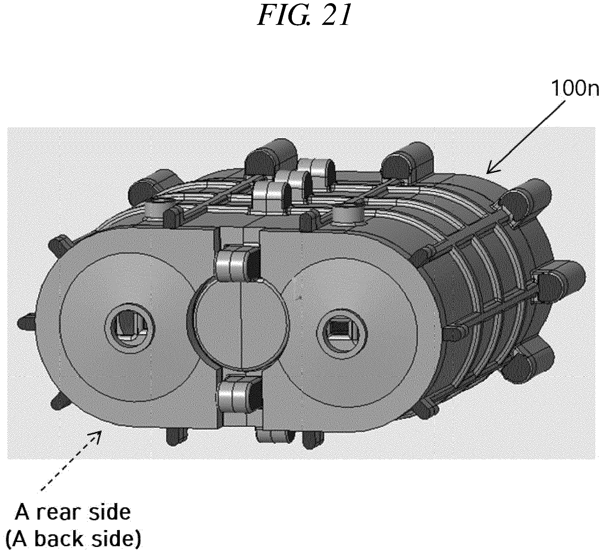

FIG. 20 is a perspective diagram illustrating the motor in an assembled state of the elements of the motor described with reference to FIGS. 18 and 19, from the front side of the motor. FIG. 21 is a perspective diagram illustrating the motor in an assembled state of the elements of the motor described with reference to FIGS. 18 and 19, from the rear side of the motor. The reference number 100n denotes a housing structure 100n in an assembled state.

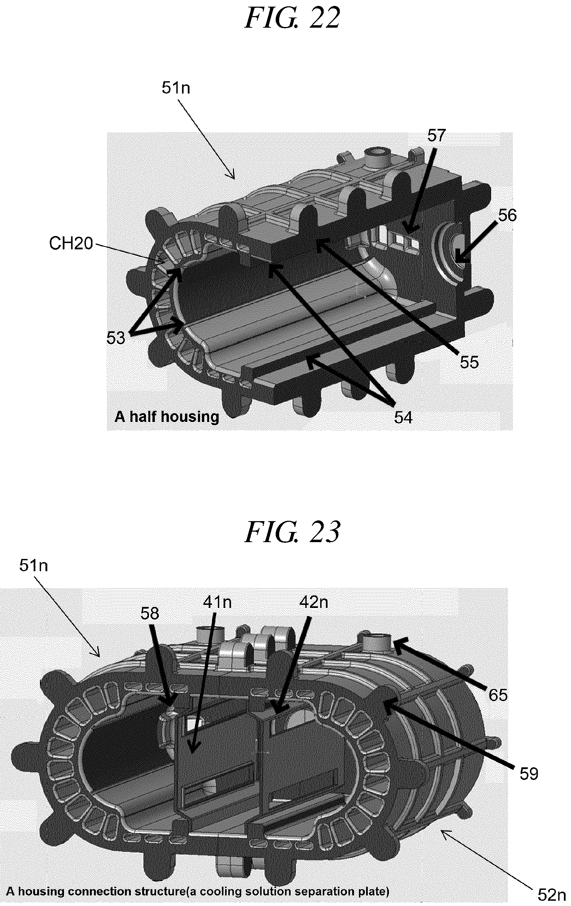

FIG. 22 is a perspective diagram for explaining the structure of the first housing body 51n described in FIGS. 18 and 19 in more detail.

Referring to FIG. 22, the reference number 53 denotes a 'fastening guide groove' (i.e., a fixing guide) in which the projection portion (N1 in FIGS. 16 and 17) of the first stator (21n in FIGS. 16 and 17) may be inserted and the first stator may be mounted in the first hosing body 51n. The reference number 54 denotes a fixing guide unit for fixing the coil unit (30n in FIG. 18) when the coil unit (30n in FIG. 18) coupled to the first stator (21n in FIG. 18) is inserted and fixed into the first housing body unit 51n. A coil unit (30n in FIG. 18) may be coupled to the inner side of the fixing guide unit 54, and a first cooling solution separation plate (41n in FIG. 18) may be attached or mounted to the outside of the fixing guide unit 54. The reference number 55 denotes a surface matching with the second housing body unit (52n in FIG. 18). The reference number 56 denotes a bearing mounting surface of a rear side. The reference number 57 denotes the cooling solution (cooling water) outlet of the direct cooling channel. The reference number CH20 denotes an indirect cooling channel provided in the outer wall unit of the first housing body unit 51n.

In an embodiment, the second housing body unit 52n described with reference to FIGS. 18 and 19 may have a symmetrical structure to the first housing body unit 51n of FIG. 22.

FIG. 23 is a perspective diagram illustrating a state in which the first and the second housing body units 51n and 52n are coupled or assembled to each other.

Referring to FIG. 23, according to the invention, the first and second housing body units 51n and 52n are coupled to each other, and the first and the second cooling solution separation plates 41n and 42n are disposed therein to be spaced apart from each other. The reference number 58 denotes a mounting seat on which the stator (21n in FIGS. 16 and 17) (i.e., the stator core) may be mounted. The reference number 59 denotes a surface matching with the front cover unit (60n in FIG. 18). The reference number 65 denotes an assembly unit for assembling the bus bar of the coil unit (30n in FIG. 18).

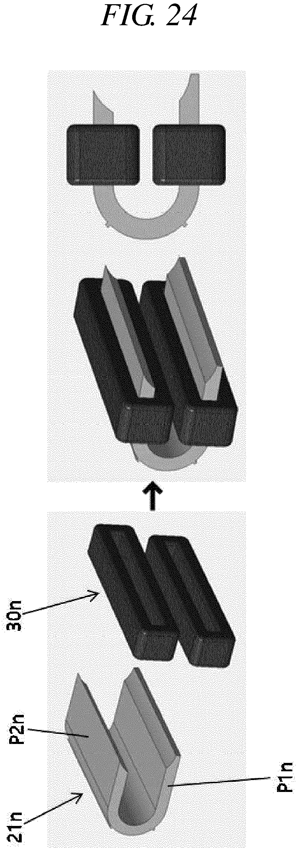

FIG. 24 is a diagram illustrating a method for assembling a coil unit 30n into the first stator 21n.

Referring to FIG. 24, the coil unit 30n may be simply assembled into each of the first and the second main yoke portions P1n and P2n of the first stator 21n by an insertion of the coil unit 30n. It may be understood that this may be remarkably simpler than the coil unit assembly method (i.e., a winding assembly of a hairpin type) applied to the conventional motor.

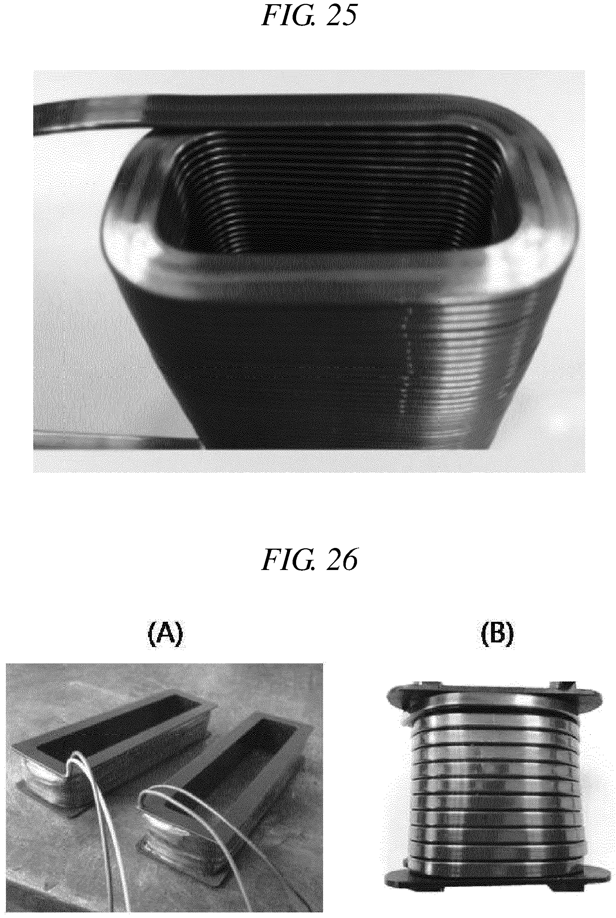

At this time, as the coil unit 30n (i.e., winding), a winding configuration as shown in FIG. 25 may be used. FIG. 25 shows a winding configuration manufactured in a form having a region to be inserted by winding an angled coil (i.e., a coil having a rectangular cross-section) without using a bobbin. In the case using a coil in the form of an angled wire, the space occupancy rate may be easily increased, and it may be easily fabricated in a form that the coil is able to be inserted without a bobbin.

In some cases, a coil unit wound around a bobbin may be applied as the coil unit 30n. A case in which a bobbin is used is shown in FIG. 26a and FIG. 26b. As described above, the coil unit wound around the bobbin may be applied to the embodiment of the present invention.

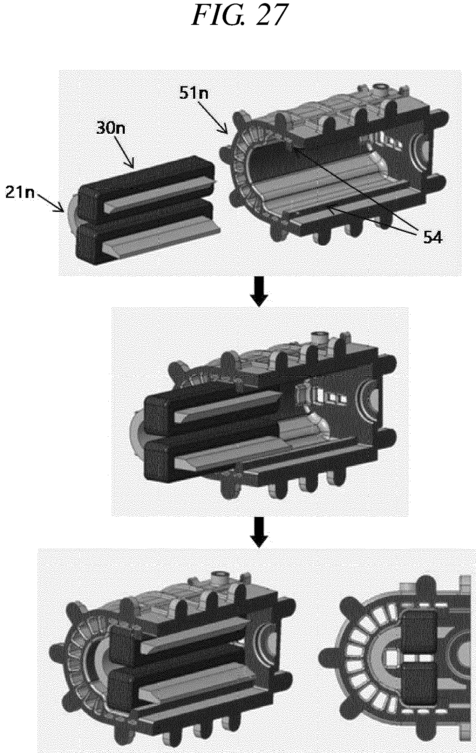

FIG. 27 is a diagram illustrating a process for assembling the first stator 21n into which the coil unit 30n is assembled, into the first housing body 51n.

Referring to FIG. 27, the first stator 21n to which the coil unit 30n is assembled may be assembled into the first housing body unit 51n by an insertion process of the first stator 21n. At this time, the coil unit 30n may be bonded to the inner side of the fixing guide unit 54 .

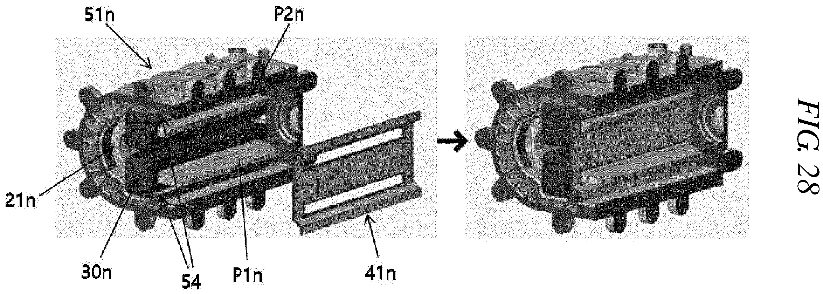

FIG. 28 is a diagram illustrating a process for assembling the first cooling solution separation plate 41n into the first housing body 51n in a state in which the first stator 21n in which the coil unit 30n is arranged is assembled into the first housing body unit 51n.

Referring to FIG. 28, in a state wherein the first stator 21n into which the coil unit 30n is assembled is assembled into the first housing body unit 51n, subsequential assembly may be implemented by inserting the first cooling solution separation plate 41n into the first housing body 51n. At this time, the first cooling solution separation plate 41n may be bonded (mounted) on the outside of the fixing guide unit 54. Also, the ends of the first and the second main yoke portions P1n and P2n may be projected through the two rectangular openings of the first cooling solution separation plate 41n. When assembling the first cooling solution separation plate 41n as described above, the first cooling solution separation plate 41n may be completely(almost completely) assembled in a state in which the degree of freedom of the coil unit 30n is zero or almost zero.

As described above, assembly of the motor according to the embodiment described with reference to FIGS. 24 to 28 may be easily performed in a very simple manner.

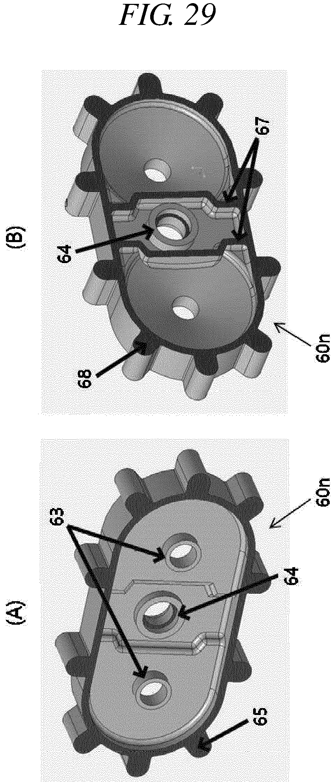

FIG. 29 is a perspective diagram illustrating a front cover unit 60n described with reference to FIGS. 18 and 19 in more detail. FIG. 29a shows a front side of the front cover unit 60n, and FIG. 29b shows a rear side of the front cover unit 60n.

Referring to FIG. 29, the front cover unit 60n may include a cooling fluid inlet 63. Two cooling fluid inlets 63 may be provided in the front cover unit 60n. The two cooling fluid inlets 63 may be provided to respectively correspond to the regions in which the first and the second stators (21n and 22n in FIG. 18) are provided. The two cooling fluid inlets 63 may be referred to as 'the first and the second cooling fluid inlets'.

In FIG. 29, the reference number 64 denotes an opening through which an end of the shaft (1n in FIG. 18) is exposed. A bearing may be mounted around the opening 64. The reference number 65, for example, may be a surface to which the reducer is matched when the motor is applied to an electric vehicle. The reference number 67 may be a structure for separating a cooling solution (e.g., cooling water) and a shaft (1n in FIG. 18). The reference number 68 may be a surface matching the housing body units (51n, 52n in FIG. 18).

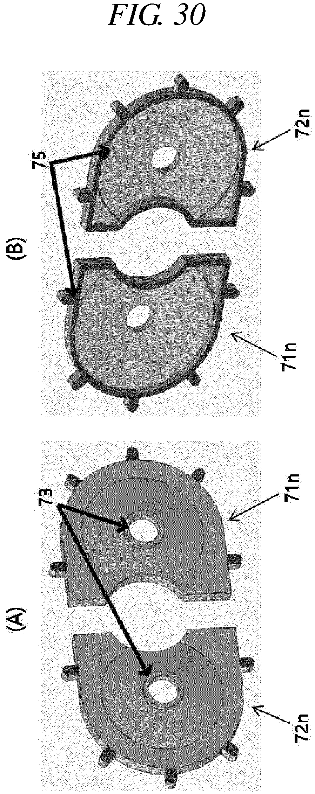

FIG. 30 is a perspective diagram illustrating the rear cover units 71n and 72n described with reference to FIGS. 18 and 19 in more detail. FIG. 30a shows the outer surfaces of the rear cover units 71n, 72n, and FIG 30b shows the inner surface of the rear cover units 71n, 72n.

Referring to FIG. 30, a cooling fluid outlet 73 may be provided in the rear cover units 71n and 72n. A cooling fluid outlet 73 may be provided in each of the first rear cover unit 71n and the second rear cover unit 72n. The cooling fluid outlet 73 provided in the first rear cover unit 71n may be referred to as the first cooling fluid outlet, and the cooling fluid outlet 73 provided in the second rear cover unit 72n may be referred to as the second cooling fluid outlet. The reference number 75 may be a surface matching with the housing body unit (51n, 52n in FIG. 18).

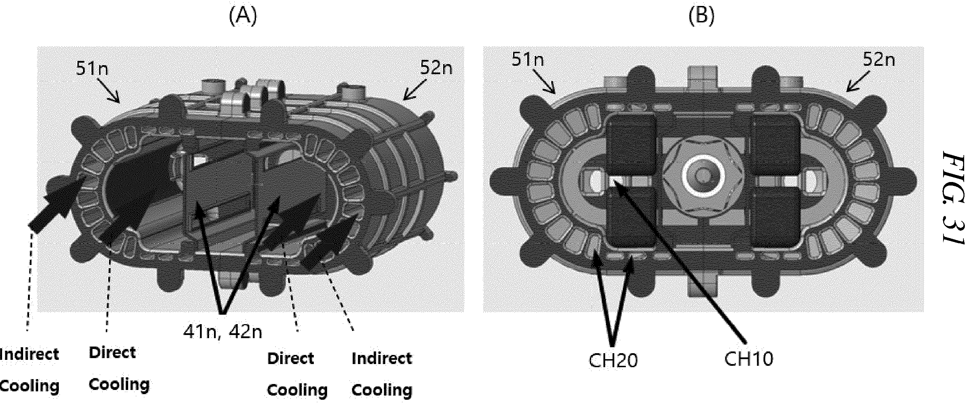

FIG. 31 is an exemplified diagram illustrating a design of a cooling fluid passage applied to a housing structure of a motor according to an embodiment of the present invention.

Referring to FIG. 31, in a state in which the first and the second housing body units 51n and 52n are assembled, the first and the second cooling solution separation plates 41n and 42n may be provided therein. A cooling channel CH10 may be formed directly at one side (a left side in the drawing) of the first cooling solution separation plate 42n and at one side (a right side in the drawing) of the second cooling solution separation plate 42n. A cooling solution may not be introduced between the first and the second cooling solution separation plates 41n and 42n. An indirect cooling channel CH20 may be formed in the outer wall units of the first and the second housing body units 51n and 52n. Cooling of the motor may be performed by using both of the direct cooling method using the direct cooling channel CH10 and the indirect cooling method using the indirect cooling channel CH20. However, in some cases, the indirect cooling method may not be applied.

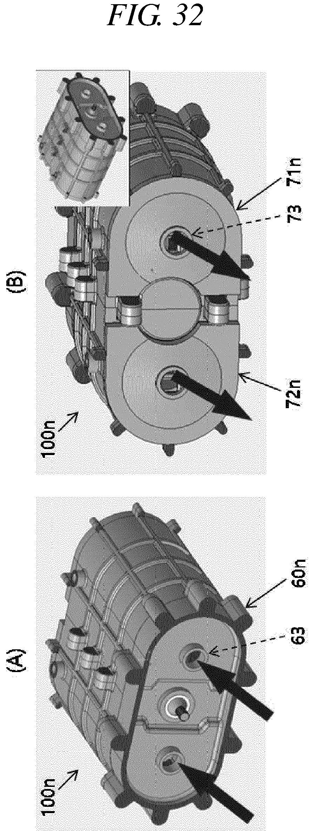

FIG. 32 is an exemplified diagram illustrating a design of inflow and outflow of a cooling solution applied to a housing structure of a motor according to the embodiment of the present invention.

Referring to FIG. 32, one or more cooling solution injection holes 63 may be provided at a side of the front cover unit 60n of the housing structure 100n, and one or more cooling solution injection holes 73 may be provided at a side of the rear cover unit 71n and 72n side. For example, the left/right two cooling fluid inlets 63 may be provided in the front cover unit 60n, and the left/right two cooling fluid outlets 73 may be provided in the rear cover units 71n and 72n. A cooling solution (e.g., cooling water) may be injected into the housing structure 100n through the cooling fluid inlet 63, and may be discharged through the cooling fluid outlet 73 after passing through the housing structure 100n. At this time, the cooling solution may be flowed separately into a direct cooling channel (CH10 in FIG. 31) and an indirect cooling channel (CH20 in FIG. 31), respectively.

In the motor described with reference to FIGS. 16 to 32, a watertight structure (a watertight member) for watertight performance in fabricating and assembling each element may be added. As a portion in which the watertight structure (a watertight member) is to be added, a contact surface between the cooling solution separation plates 41n and 42n and the housing body units 51n and 52n; an area between the cooling solution separation plate 41n, 42n and an insertion unit (an assembly unit) of the stator 21n, 22n; a contact surface between the cooling solution separation plates 41n and 42n and the front cover unit 60n, and the like may be exemplified. Furthermore, a gasket may be considered in the design for the watertight structure.

Although the configuration that the motor may have is specifically described with reference to FIGS. 16 to 32, this is only an example, and the configuration of the motor may be variously changed within the scope of the present invention. According to various embodiments of the present invention described with reference to FIGS. 1 to 11, the external appearance and the specific configuration of the inside of the motor may be variously changed.

In addition, in the above-mentioned embodiment, the structure in which the coil unit is wound on each of all the main yoke portions is mainly illustrated and described, but according to another embodiment, a structure in which the coil unit is wound only on some main yoke portions instead of all the main yoke portions may also be implemented.

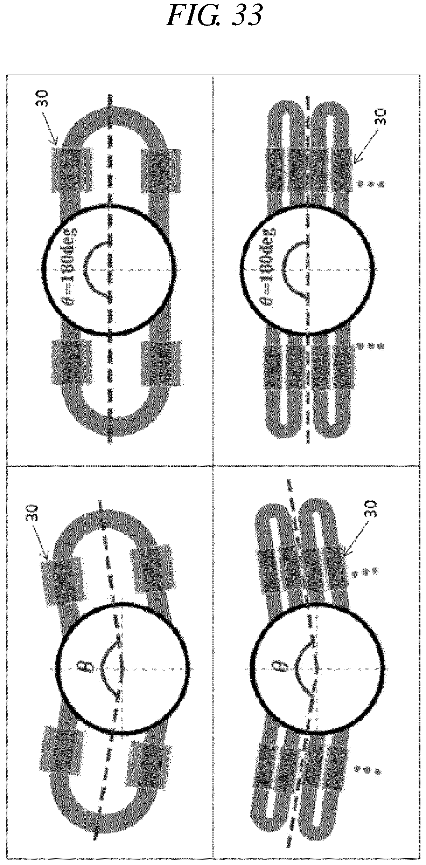

FIG. 33 shows a configuration of a moto having a structure in which a coil unit is wound around all main yoke portions, respectively, according to an embodiment of the present invention. In FIG. 33, the reference number 30 denotes a coil unit. In FIG. 33, the remaining components except for the coil unit 30 may be the same as those described with reference to FIGS. 8 to 11, and thus detailed descriptions of the remaining components will not be repeated.

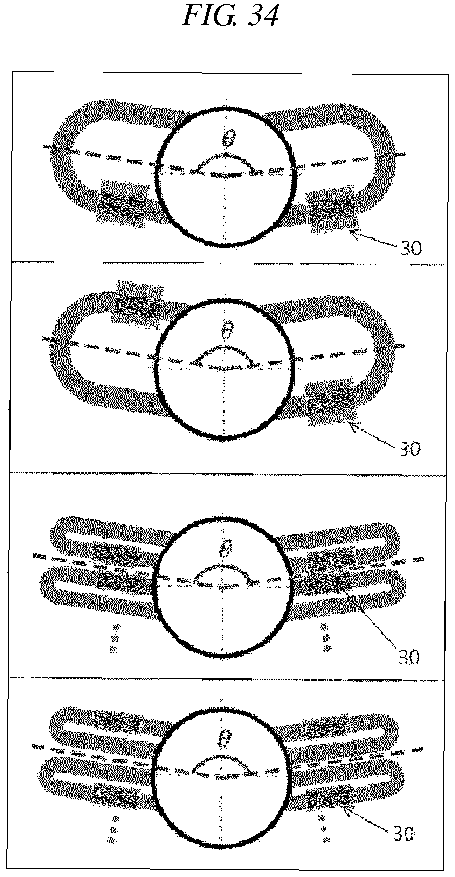

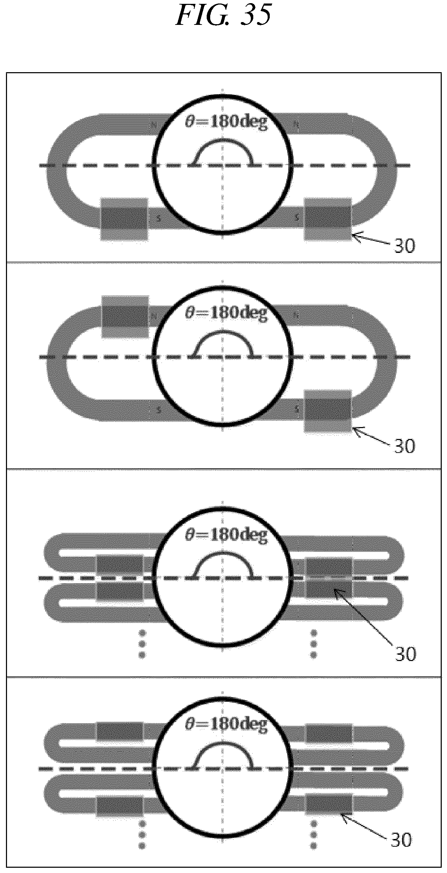

FIG. 34 and FIG. 35 show a configuration of an electric motor having a structure in which a coil unit is wound only on some main yoke portions among a plurality of main yoke portions according to another embodiment of the present invention. In FIG. 34 and FIG. 35, the reference number 30 denotes a coil unit. In FIG. 34 and FIG. 35, the other elements except for the coil unit 30 may be the same as those described with reference to FIGS. 8 to 11, and thus detailed descriptions of the remaining components will be omitted.

As shown in FIG. 34 and FIG. 35, the coil unit 30 may be disposed in only one of the lower main yoke portion and the upper main yoke portion of each stator. As such, when the motor is configured to have a structure in which the coil unit 30 is wound only on some of the main yoke portions among the plurality of main yoke portions, it is possible to more easily design a system advantageous for cooling. In addition, various design modifications related to magnetic flux alignment may be possible.

According to the above-described embodiments of the present invention, it is possible to implement a motor having a structure that may overcome the problem of inefficiency caused by the cylindrical structure (i.e., isotropic structure) of the conventional motor, and may increase space utilization and stability of arrangement. For example, the motor or according to the embodiment of the present invention may reduce the degree of difficulty in the package design of the electric vehicle (it is easy to implement the inverter/motor integrated type), and may increase the freedom of arrangement for designing the engine room. In the case of a V-shaped motor, it may be also possible to design according to the surrounding situation by adjusting an angle. If a flat or dominantly flat type motor according to the present invention is disposed as the rear wheel motor of the vehicle, it is possible to additionally secure a storage space and an occupant space of the vehicle. According to this embodiment of the present invention, as the design difficulty is lowered, the manufacturing cost may be reduced. Furthermore, the effects such as improvement of system efficiency and reduction of the manufacturing cost may be obtained.

In addition, according to the embodiments of the present invention, it is possible to implement a motor capable of greatly improving the ease and convenience of designing and assembling the coil unit as compared with the conventional motor. In this regard, an effect such as significantly reducing labor cost and manufacturing cost may be acquired when manufacturing the motor.

In addition, according to the embodiments of the present invention, it is possible to implement a motor capable of increasing the power density and ultimately increasing the system efficiency due to superior cooling performance and cooling efficiency as compared with the conventional motor. In the case of a conventional motor, there is a limit to the cooling method due to the structure of the stator that surrounds the rotor in a circular way. The stator core and windings (coils) are heated to high temperatures, which may be difficult to cool effectively. The high-temperature heat may cause a sudden decrease in motor system efficiency, and breakdown of insulation in the windings, which may lead to a system failure. In order to apply the method in which the coil unit is directly immersed in the cooling fluid to the existing two-phase or three-phase system, a problem occurs in which the rotor is immersed in the cooling fluid. This is undesirable because it causes a drag phenomenon of the rotor and further deteriorates the performance of the system. Moreover, since there must be a flow of water in the region of the rotor, to secure the watertight may be more difficult. On the other hand, in the structure according to the embodiment of the present invention, since it is easy to design that only the coil and the stator core are immersed in the cooling fluid, the above problems may be easily solved. Ultimately, by applying such an effective cooling method, it is possible to achieve high density of motor output, and thus, it is possible to obtain the effect of facilitating high power/high density design of the motor.

In addition, according to embodiments of the present invention, torque control performance may be increased through magnetic flux alignment between the rotor and the stator, and torque may be continuously generated. In addition, it is possible to solve the problem that an uneven force is generated in the eccentric direction of the rotation shaft during rotation of the rotor, and to improve the rotation characteristics of the rotor. In addition, when the motor according to the embodiment of the present invention is used, since the number of slots in the stator is small, it is possible to suppress the generation of noise in the audible frequency band. The motor according to the above-described embodiments of the present invention may be usefully applied to various fields such as a driving motor of an electric vehicle or a home appliance industry.

In the present specification, the preferred embodiments of the present invention have been disclosed, and although specific terms are used, they are only used in a general sense to easily describe the technical content of the present invention and to help the understanding of the present invention. They are not used to limit the scope of the present invention. It is apparent to those skilled in the art that other modified examples based on the technical concepts of the present invention may be implemented as well as the embodiments disclosed herein. In connection with the motor device according to the embodiments described with reference to FIGs. 1-35, those of ordinary skill in the art will understand that various substitutions, changes, and modifications may be made within the scope of the appended claims.

### [Explanation of Symbols]

* Explanation of symbols of the main parts of drawings *

| | | | |
|---|---|---|---|
| 1n: | a shaft, | 5: | a magnet member |
| 10, 10n: | a rotor | | |
| 21a to 21g, 21n: | a first stator, | 22a to 22g, 22n: | a second stator |
| 30, 30n: | coil unit, | 41n, 42n: | a cooling solution separation plate |
| 51n, 52n: | a housing body unit, | 60n: | a front cover unit |
| 71n, 72n: | a rear cover unit | 100a-100g, 100n : | a housing structure, |
| C1a- C1g, C1n : | a first rear yoke portion | C2a-C2g, C2n : | a second rear yoke portion |
| CH1, CH10 : | a direct cooling channel | CH2, CH20: | an indirect cooling channel |
| P1a - P1g, P1n: | a first main yoke portion | P2a-P2g, P2n: | a second main yoke portion |
| P3a - P3g, P3n: | a third main yoke portion | P4a - P4g, P4n: | a fourth main yoke portion |
| S1f, S1g: | a first shoe member | S2f, S2g: | a second shoe member |
| S3f, S3g: | a third shoe member | S4f, S4g: | a fourth shoe member |
| SP1a, SP1b: | a first side stator unit | SP2a, SP2b: | a second side stator unit |
| N1, N2: | a projection portion | | |

## Claims

1. A motor comprising,
a rotor (10, 10n) including a magnet member (5);
a first side stator unit (SP1a, SP1b, 21a-21g, 21n) including a first and a second main yoke portions (P1a-P1g, P1n; P2a-P2g, P2n) which are disposed at one side of the rotor (10, 10n) and are extended to the side of the rotor (10, 10n) with being spaced which are apart from each other, and at least one first stator (21a-21g, 21n) including a first rear yoke portion (C1a-C1g, C1n) interconnecting outer ends of the first and the second main yoke portions;
a second side stator unit (SP2a, SP2b, 22a-22g, 22n) including a third and a fourth main yoke portions (P3a-P3g, P3n; P4a-P4g, P4n) which disposed at the other side of the rotor (10, 10n) to face the first side stator unit (SP1a, SP1b, 21a-21g, 21n) with the rotor (10,10n) interposed therebetween and are extended to the side of the rotor (10. 10n) with being spaced apart from each other, and at least one second stator (22a-22g, 22n) including a second rear yoke portion (C2a-C2g, C2n) interconnecting the outer ends of the third and the fourth main yoke portions (P3a-P3g, P3n; P4a-P4g, P4n);
a coil unit (30, 30n) provided to surround at least one of the first and the second main yoke portions (P1a-P1g, P1n; P2a-P2g, P2n), and at least one of the third and the fourth main yoke portions (P3a-P3g, P3n; P4a-P4g, P4n), respectively;
a housing structure (100a-100g, 100n) configured to surround the rotor (10, 10n), the first side stator unit (SP1a, SP1b, 21a-21g, 21n), the second side stator unit (SP2a, SP2b, 22a-22g, 22n), and the coil unit (30, 30n);
**characterized in that** the direct cooling system (CH1, CH10) is configured to directly cool the first side stator unit (SP1a, SP1b, 21a-21g, 21n), the second side stator unit (SP2a, SP2b, 22a-22g, 22n), and the coil unit (30, 30n) by using a cooling solution,
wherein a first and a second cooling solution separation plates (41n, 42n) for separating the cooling solution from the rotor (10, 10n) are disposed in the housing structure (100a-100g, 100n),
wherein the first cooling solution separation plate (41n) is disposed at a side on which the first side stator unit (SP1a, SP1b, 21a-21g, 21n) is disposed in a first housing body unit (51n), and the second cooling solution separation plate (42n) is disposed at a side on which the second side stator unit (SP2a, SP2b, 22a-22g, 22n) is disposed in a second housing body unit (52n) to be spaced apart from each other, wherein the first and second body units (51n, 52n) are coupled to each other, and
wherein a first and a second cooling solution inlets (63) are disposed at one end of the housing structure (100a-100g, 100n), a first and a second cooling solution outlets (73) are disposed at the other end of the housing structure (100a-100g, 100n), and the cooling solution is injected into the housing structure (100a-100g, 100n) through the first and the second cooling solution inlets (63), and is discharged out of the housing structure (100a-100g, 100n) through the first and the second cooling solution outlets (73).

2. The motor according to the claim 1, wherein each of the first and second stators (21a-21g, 21n; 22a-22g, 22n) has an opening toward the rotor (10, 10n), and the first to the fourth main yoke portions (P1a-P1g, P1n; P2a-P2g, P2n; P3a-P3g, P3n; P4a-P4g, P4n) extend in a straight line so that the coil unit (30, 30n) slides on the first to the fourth main yoke portions (P1a-P1g, P1n; P2a-P2g, P2n; P3a-P3g, P3n; P4a-P4g, P4n) through the opening and couples with the first to the fourth main yoke portions (P1a-P1g, P1n; P2a-P2g, P2n; P3a-P3g, P3n; P4a-P4g, P4n).

3. The motor according to the claim 1, wherein the housing structure (100a-100g, 100n) has an anisotropic structure accommodating the first to the fourth main yoke portions (P1a-P1g, P1n; P2a-P2g, P2n; P3a-P3g, P3n; P4a-P4g, P4n) with respect to the rotor (10, 10n).

4. The motor according to the claim 1, wherein the first stator (21a-21g, 21n) and the second stator (22a-22g, 22n) are arranged to form an inner angle θ greater than 90° and less than 180° with respect to the rotor (10, 10n).

5. The motor according to the claim 4, wherein the inner angle θ satisfies 130° < θ < 180°.

6. The motor according to the claim 1, wherein the first stator (21b-21e, 21n) and/or the second stator (22b-22e, 22n) are arranged to be shifted by a predetermined distance in the vertical direction with respect to the center of the rotor (10, 10n).

7. The motor according to the claim 1, wherein the first stator (21c, 21e) and the second stator (22c, 22e) have different heights in the vertical direction with respect to the center of the rotor (10, 10n).

8. The motor according to the claim 1, wherein the first and the second main yoke portions (P1b-P1g, P1n; P2b-P2g, P2n) have different lengths from each other, and/or,
wherein the third and the fourth main yoke portions (P3b-P3g, P3n; P4b-P4g, P4n) have different lengths from each other.

9. The motor according to the claim 1, wherein at least one of the first and the second main yoke portions (P1b-P1g, P1n; P2b-P2g, P2n) includes a shoe member (S1f, S1g; S2f, S2g) at an end adjacent to the rotor (10, 10n), and the shoe member (S1f, S1g; S2f, S2g) is bent by a predetermined angle with respect to the corresponding main yoke portion.

10. The motor according to the claim 1, wherein the first main yoke portion (P1b-P1g, P1n) includes a first shoe member (S1f, S1g) at an end adjacent to the rotor (10, 10n), the second main yoke portion (P2a-P2g, P2n) includes a second shoe member (S2f, S2g) at an end adjacent to the rotor (10, 10n), the first shoe member (S1f, S1g) and the second shoe member (S2f, S2g) have different shapes.

11. The motor according to the claim 1, wherein the first side stator unit (SP1a, SP1b) includes a plurality of the first stators (21a-1, 21a-2, 21b-1, 21b-2) arranged to be spaced apart in a vertical direction parallel to a direction of the thickness of the motor, and
wherein the second side stator unit (SP2a, SP2b) includes a plurality of the second stators (22a-1, 22a-2, 22b-1, 22b-2) arranged to be spaced apart in the vertical direction.

12. The motor according to the claim 1, wherein an indirect cooling channel (CH2, CH20) through which a cooling fluid may pass is disposed at a peripheral surface of the housing structure (100a-100g, 100n).

13. The motor according to the claim 1, which the motor is a two-phase electric motor and is configured to be driven by a driver having a 4-leg inverter.

## Patentansprüche

1. Motor, umfassend:
einen Rotor (10, 10n), der ein Magnetelement (5) aufweist;
eine Statoreinheit einer ersten Seite (SP1a, SP1b, 21a-21g, 21n), die einen ersten und einen zweiten Hauptjochabschnitt (P1a-P1g, P1n; P2a-P2g, P2n) aufweist, die auf einer Seite des Rotors (10, 10n) angeordnet sind und sich zu der Seite des Rotors (10, 10n) erstrecken, während sie voneinander beabstandet sind, und mindestens einen ersten Stator (21a-21g, 21n) aufweist, der einen ersten hinteren Jochabschnitt (C1a-C1g, C1n) aufweist, der äußere Enden des ersten und des zweiten Hauptjochabschnitts (P1a-P1g, P1n; P2a-P2g, P2n) miteinander verbindet;
eine Statoreinheit einer zweiten Seite (SP2a, SP2b, 22a-22g, 22n), die einen dritten und einen vierten Hauptjochabschnitt (P3a-P3g, P3n; P3a-P3g, P3n; P4a-P4g, P4n) aufweist, die auf der anderen Seite des Rotors (10, 10n) so angeordnet sind, dass sie dem Stator einer ersten Seite (SP1a, SP1b, 21a-21g, 21n) zugewandt sind, während der Rotor (10, 10n) dazwischen angeordnet ist, und sich zu der Seite des Rotors (10, 10n), erstrecken, während sie voneinander beabstandet sind, und mindestens einen zweiten Stator (22a-22g, 22n) aufweist, der einen zweiten hinteren Jochabschnitt (C2a-C2g, C2n) aufweist, der äußere Enden des dritten und des vierten Hauptjochabschnitts (P3a-P3g, P3n; P4a-P4g, P4n) miteinander verbindet;
eine Spuleneinheit (30, 30n), die so bereitgestellt ist, dass sie jeweils mindestens einen des ersten und des zweiten Hauptjochabschnitts (P1a-P1g, P1n; P2a-P2g, P2n) und mindestens einen des dritten und des vierten Hauptjochabschnitts (P3a-P3g, P3n; P4a-P4g, P4n) umgibt;
eine Gehäusestruktur (100a-100g, 100n), die so eingerichtet ist, dass sie den Rotor (10, 10n), die Statoreinheit einer ersten Seite (SP1a, SP1b, 21a-21g, 21n), die Statoreinheit einer zweiten Seite (SP2a, SP2b, 22a-22g, 22n) und die Spuleneinheit (30, 30n) umgibt,
**dadurch gekennzeichnet, dass** das direkte Kühlsystem (CH1, CH10) dazu eingerichtet ist, die Statoreinheit (SP1a, SP1b, 21a-21g, 21n) der ersten Seite, die Statoreinheit (SP2a, SP2b, 22a-22g, 22n) der zweiten Seite und die Spuleneinheit (30, 30n) unter Verwendung einer Kühllösung direkt zu kühlen,
wobei eine erste und eine zweite Kühllösungstrennplatte (41n, 42n) zum Trennen der Kühllösung von dem Rotor (10, 10n) in der Gehäusestruktur (100a-100g, 100n) angeordnet sind,
wobei die erste Kühllösungstrennplatte (41n) auf einer Seite angeordnet ist, auf der die Statoreinheit einer ersten Seite (SP1a, SP1b, 21a-21g, 21n) in einer ersten Gehäusekörpereinheit (51n) angeordnet ist, und die zweite Kühllösungstrennplatte (42n) auf einer Seite angeordnet ist, auf der die Statoreinheit einer zweiten Seite (SP2a, SP2b, 22a-22g, 21n) in einer zweiten Gehäusekörpereinheit (52n) angeordnet ist, dergestalt, dass sie voneinander beabstandet sind, wobei die erste und die zweite Körpereinheit (51n, 52n) miteinander gekoppelt sind, und
wobei ein erster und ein zweiter Kühllösungseinlass (63) an einem Ende der Gehäusestruktur (100a-100g, 100n) angeordnet sind, ein erster und ein zweiter Kühllösungsauslass (73) am anderen Ende der Gehäusestruktur (100a-100g, 100n) angeordnet sind, und die Kühllösung durch den ersten und den zweiten Kühllösungseinlass (63) in die Gehäusestruktur (100a-100g, 100n) eingespritzt wird und durch den ersten und den zweiten Kühllösungsauslass (73) aus der Gehäusestruktur (100a-100g, 100n) abgelassen wird.

2. Motor nach Anspruch 1, wobei jeder des ersten und des zweiten Stators (21a-21g, 21n; 22a-22g, 22n) eine Öffnung in Richtung des Rotors (10, 10n) aufweist, und der erste bis vierte Hauptjochabschnitt (P1a-P1g, P1n; P2a-P2g, P2n; P3a-P3g, P3n; P4a-P4g, P4n) sich in einer geraden Linie erstrecken, dergestalt, dass die Spuleneinheit (30, 30n) auf dem ersten bis vierten Hauptjochabschnitt (P1a-P1g, P1n; P2a-P2g, P2n; P3a-P3g, P3n; P4a-P4g, P4n) durch die Öffnung hindurch gleitet und mit dem ersten bis vierten Hauptjochabschnitt (P1a-P1g, P1n; P2a-P2g, P2n; P3a-P3g, P3n; P4a-P4g, P4n) gekoppelt wird.

3. Motor nach Anspruch 1, wobei die Gehäusestruktur (100a-100g, 100n) eine anisotrope Struktur aufweist, die den ersten bis vierten Hauptjochabschnitt (P1a-P1g, P1n; P2a-P2g, P2n; P3a-P3g, P3n; P4a-P4g, P4n) in Bezug auf den Rotor (10, 10n) aufnimmt.

4. Motor nach Anspruch 1, wobei der erste Stator (21a-21g, 21n) und der zweite Stator (22a-22g, 22n) so angeordnet sind, dass sie einen Innenwinkel θ von mehr als 90° und weniger als 180° in Bezug auf den Rotor (10, 10n) bilden.

5. Motor nach Anspruch 4, wobei der Innenwinkel θ 130° < θ < 180° erfüllt.

6. Motor nach Anspruch 1, wobei der erste Stator (21b-21e, 21n) und/oder der zweite Stator (22b-22e, 22n) so angeordnet sind, dass sie um eine zuvor festgelegte Distanz in der vertikalen Richtung in Bezug auf die Mitte des Rotors (10, 10n) verschoben sind.

7. Motor nach Anspruch 1, wobei der erste Stator (21c, 21e) und der zweite Stator (22c, 22e) in der vertikalen Richtung in Bezug auf die Mitte des Rotors (10, 10n) unterschiedliche Höhen aufweisen.

8. Motor nach Anspruch 1, **dadurch gekennzeichnet, dass** der erste und der zweite Hauptjochabschnitt (P1b-P1g, P1n; P2bP2g, P2n) voneinander verschiedene Längen aufweisen, und/oder
wobei der dritte und der vierte Hauptjochabschnitt (P3bP3g, P3n; P4b-P4g, P4n) voneinander verschiedene Längen aufweisen.

9. Motor nach Anspruch 1, wobei mindestens einer des ersten und des zweiten Hauptjochabschnitts (P1a-P1g, P1n; P2a-P2g, P2n) ein Schuhelement (S1f, S1g; S2f, S2g) an einem Ende neben dem Rotor (10, 10n) aufweist, und das Schuhelement (S1f, S1g; S2f, S2g) um einen zuvor festgelegten Winkel in Bezug auf den entsprechenden Hauptjochabschnitt gebogen ist.

10. Motor nach Anspruch 1, wobei der erste Hauptjochabschnitt (P1a-P1g, P1n) ein erstes Schuhelement (S1f, S1g) an einem Ende neben dem Rotor (10, 10n) aufweist, der zweite Hauptjochabschnitt (P2a-P2g, P2n) ein zweites Schuhelement (S2f, S2g) an einem Ende neben dem Rotor (10, 10n) aufweist, das erste Schuhelement (S1f, S1g) und das zweite Schuhelement (S2f, S2g) unterschiedliche Formen aufweisen.

11. Motor nach Anspruch 1, wobei die Statoreinheit einer ersten Seite (SP1a, SP1b) mehrere der ersten Statoren (21a-1, 21a-2, 21b-1, 21b-2) aufweist, die so angeordnet sind, dass sie in einer vertikalen Richtung parallel zu einer Richtung der Dicke des Motors beabstandet sind, und
wobei die Statoreinheit einer zweiten Seite (SP2a, SP2b) mehrere der zweiten Statoren (22a-1, 22a-2, 22b-1, 22b-2) aufweist, die so angeordnet sind, dass sie in der vertikalen Richtung beabstandet sind.

12. Motor nach Anspruch 1, wobei ein indirekter Kühlkanal (CH2, CH20), durch den ein Kühlfluid fließen kann, an einer Umfangsfläche der Gehäusestruktur (100a-100g, 100n) angeordnet ist.

13. Motor nach Anspruch 1, **dadurch gekennzeichnet, dass** der Motor ein Zweiphasen-Elektromotor ist und dazu eingerichtet ist, durch eine Ansteuerung, die einen Vier-Schenkel-Wechselrichter aufweist, angesteuert zu werden.

## Revendications

1. Moteur comprenant :
un rotor (10, 10n) comprenant un élément à aimant (5) ;
une unité de stator d'un premier côté (SP1a, SP1b, 21a-21g, 21n) comportant une première et une deuxième parties de culasse principale (P1a-P1g, P1n ; P2a-P2g, P2n) qui sont disposées sur un côté du rotor (10, 10n) et s'étendent jusqu'au côté du rotor (10, 10n) tout en étant espacées l'une de l'autre, et au moins un premier stator (21a-21g, 21n) comportant une première partie de culasse arrière (C1a-C1g, C1n) interconnectant des extrémités extérieures des première et deuxième parties de culasse principale (P1a-P1g, P1n ; P2a-P2g, P2n) ;
une unité de stator d'un second côté (SP2a, SP2b, 22a-22g, 22n) comportant une troisième et une quatrième parties de culasse principale (P3a-P3g, P3n ; P4a-P4G, P4n) qui sont disposées de l'autre côté du rotor (10, 10n) pour faire face au premier stator d'un premier côté (SP1a, SP1b, 21a-21g, 21n) avec le rotor (10, 10n) intercalé entre celles-ci et s'étendent jusqu'au côté du rotor (10, 10n) tout en étant espacées l'une de l'autre, et au moins un second stator (22a-22g, 22n) comportant une seconde partie de culasse arrière (C2a-C2g, C2n) interconnectant les extrémités extérieures des troisième et quatrième parties de culasse principale (P3a-P3g, P3n; P4a-P4g, P4n) ;
une unité de bobine (30, 30n) agencée de manière à entourer au moins une des première et deuxième parties de culasse principale (P1a-P1g, P1n ; P2a-P2g, P2n) et au moins une des troisième et quatrième parties de culasse principale (P3a-P3g, P3n ; P4a-P4g, P4n), respectivement ;
une structure de boîtier (100a-100g, 100n) configurée pour entourer le rotor (10, 10n), l'unité de stator d'un premier côté (SP1a, SP1b, 21a-21g, 21n), l'unité de stator d'un second côté (SP2a, SP2b, 22a-22g, 22n) et l'unité de bobine (30, 30n),
**caractérisé en ce que** le système de refroidissement direct (CH1, CH10) est configuré pour refroidir directement l'unité de stator d'un premier côté (SP1a, SP1b, 21a-21g, 21n), l'unité de stator d'un second côté (SP2a, SP2b, 22a-22g, 22n) et l'unité de bobine (30, 30n) en utilisant une solution de refroidissement,
dans lequel une première et une seconde plaques de séparation de solution de refroidissement (41n, 42n) destinées à séparer la solution de refroidissement du rotor (10, 10n) sont disposées dans la structure de boîtier (100a-100g, 100n),
dans lequel la première plaque de séparation de solution de refroidissement (41n) est disposée sur un côté sur lequel l'unité de stator d'un premier côté (SP1a, SP1b, 21a-21g, 21n) est disposée dans une première unité de corps de boîtier (51n), et la seconde plaque de séparation de solution de refroidissement (42n) est disposée sur un côté sur lequel l'unité de stator d'un second côté (SP2a, SP2b, 22a-22a-22g, 21n) est disposée dans une seconde unité de corps de boîtier (52n) pour être espacées l'une de l'autre, et dans lequel les première et seconde unités de corps (51n, 52n) sont couplées l'une à l'autre, et
dans lequel une première et une seconde entrées de solution de refroidissement (63) sont disposées à une extrémité de la structure de boîtier (100a-100g, 100n), une première et une seconde sorties de solution de refroidissement (73) sont disposées à l'autre extrémité de la structure de boîtier (100a-100g, 100n), et la solution de refroidissement est injectée dans la structure de boîtier (100a-100g, 100n) par les première et seconde entrées de solution de refroidissement (63), et est évacuée hors de la structure de boîtier (100a-100g, 100n) par les première et seconde sorties de refroidissement (73).

2. Moteur selon la revendication 1, dans lequel chacun des premier et second stators (21a-21g, 21n ; 22a-22g, 22n) a une ouverture vers le rotor (10, 10n), et les première à quatrième parties de culasse principale (P1a-P1g, P1n; P2a-P2g, P2n; P3a-P3g, P3n; P4a-P4g, P4n) s'étendent en ligne droite de sorte que l'unité de bobine (30, 30n) glisse sur les première à quatrième parties de culasse principale (P1a-P1g, P1n; P2a- P2g, P2n; P3a-P3g, P3n; P4a-P4g, P4n) à travers l'ouverture et est couplée aux première à quatrième parties de culasse principale (P1a-P1g, P1n; P2a-P2g, P2n; P3a-P3g, P3n; P4a-P4g, P4n).

3. Moteur selon la revendication 1, dans lequel la structure de boîtier (100a-100g, 100n) a une structure anisotrope recevant les première à quatrième parties de culasse principale (P1a-P1g, P1n ; P2a-P2g, P2n ; P3a-P3g, P3n ; P4a-P4g, P4n) par rapport au rotor (10, 10n).

4. Moteur selon la revendication 1, dans lequel le premier stator (21a-21g, 21n) et le second stator (22a-22g, 22n) sont agencés de manière à former un angle intérieur θ supérieur à 90° et inférieur à 180° par rapport au rotor (10, 10n).

5. Moteur selon la revendication 4, dans lequel l'angle intérieur θ satisfait à 130° < θ < 180°.

6. Moteur selon la revendication 1, dans lequel le premier stator (21b-21e, 21n) et/ou le second stator (22b-22e, 22n) sont agencés de manière à être décalés d'une distance prédéterminée dans la direction verticale par rapport au centre du rotor (10, 10n).

7. Moteur selon la revendication 1, dans lequel le premier stator (21c, 21e) et le second stator (22c, 22e) ont des hauteurs différentes dans la direction verticale par rapport au centre du rotor (10, 10n).

8. Moteur selon la revendication 1, dans lequel les première et seconde parties de culasse principale (P1b-P1g, P1n ; P2b-P2g, P2n) ont des longueurs différentes l'une de l'autre, et/ou
dans lequel les troisième et quatrième parties de culasse principale (P3b-P3g, P3n ; P4b-P4g, P4n) ont des longueurs différentes l'une de l'autre.

9. Moteur selon la revendication 1, dans lequel au moins l'une des première et deuxième parties de culasse principale (P1a-P1g, P1n ; P2a-P2g, P2n) comporte un élément de patin (S1f, S1g ; S2f, S2g) à une extrémité adjacente au rotor (10, 10n), et l'élément de patin (S1f, S1g ; S2f, S2g) est plié d'un angle prédéterminé par rapport à la partie de culasse principale correspondante.

10. Moteur selon la revendication 1, dans lequel la première partie de culasse principale (P1a-P1g, P1n) comporte un premier élément de patin (S1f, S1g) à une extrémité adjacente au rotor (10, 10n), la seconde partie de culasse principale (P2a-P2g, P2n) comporte un second élément de patin (S2f, S2g) à une extrémité adjacente au rotor (10, 10n), le premier élément de patin (S1f, S1g) et le second élément de patin (S2f, S2g) ont des formes différentes.

11. Moteur selon la revendication 1, dans lequel l'unité de stator d'un premier côté (SP1a, SP1b) comporte une pluralité des premiers stators (21a-1, 21a-2, 21b-1, 21b-2) agencés de manière à être espacés dans une direction verticale parallèle à une direction de l'épaisseur du moteur, et
dans lequel l'unité de stator d'un second côté (SP2a, SP2b) comporte une pluralité des seconds stators (22a-1, 22a-2, 22b-1, 22b-2) disposés de manière à être espacés dans la direction verticale.

12. Moteur selon la revendication 1, dans lequel un canal de refroidissement indirect (CH2, CH20) à travers lequel un fluide de refroidissement peut passer est disposé sur une surface périphérique de la structure de boîtier (100a-100g, 100n) .

13. Moteur selon la revendication 1, dans lequel le moteur est un moteur électrique biphasé et est configuré pour être commandé par un dispositif de commande ayant un onduleur à 4 branches.
